(19) Europäisches Patentamt

European Patent Office

Office européen des brevets

(11) EP 0 984 039 A1

(12) EUROPEAN PATENT APPLICATION
published in accordance with Art. 158(3) EPC

(43) Date of publication:
08.03.2000 Bulletin 2000/10

(51) Int. Cl.$^7$: C08L 67/04, C08J 5/18,
C08J 3/28, C08J 9/04,
C09J 7/02

(21) Application number: 99939197.2

(22) Date of filing: 12.03.1999

(86) International application number:
PCT/JP99/01208

(87) International publication number:
WO 99/46332 (16.09.1999 Gazette 1999/37)

(84) Designated Contracting States:
BE DE FR GB IT

(30) Priority: 12.03.1998 JP 8045998
31.03.1998 JP 10338598
31.03.1998 JP 10338698
31.03.1998 JP 10338798
31.03.1998 JP 10338898
31.03.1998 JP 10338998
31.03.1998 JP 10339098
31.03.1998 JP 10339198
31.03.1998 JP 10339298
31.03.1998 JP 10339398
31.03.1998 JP 10339498
31.03.1998 JP 10339598

(71) Applicant:
DAICEL CHEMICAL INDUSTRIES, Ltd.
Sakai-shi, Osaka 590-0905 (JP)

(72) Inventors:
• YOSHII, Fumio
  Japan Atomic Energy Research Inst.
  Takasaki-shi Gunma 370-1207 (JP)
• MAKUUCHI, Keizo
  Japan Atomic Energy Research Inst.
  Takasaki-shi Gunma 370-1207 (JP)
• MITOMI, Hiroshi
  Faculty of Engineering
  Kiryu-shi Gunma 376-0052 (JP)
• DARMAWAN, Darwis
  Faculty of Engineering
  Kiryu-shi Gunma 376-0052 (JP)
• MURAKAMI, Tadashi
  Matsudo-shi Chiba 270-0035 (JP)

(74) Representative:
Portal, Gérard et al
Cabinet Beau de Loménie
158, rue de l'Université
75340 Paris Cédex 07 (FR)

(54) **LACTONE-CONTAINING RESIN COMPOSITION, MOLDED OBJECT THEREOF, AND FILM**

(57) The present invention relates to a polycaprolactone resin irradiated by ionizing radiation in order to adjust gel fraction to 0.01-90%, a polycaprolactone-contained resin composition containing at least any one of other biodegradable resins such as an aliphatic polyester resin and an additive for resins, and an molded article therefrom. The molded article includes a thin-walled molded article such as a film, a bag for garbages, a mulch film for agriculture, a shrink film, a sheet-like molded article, and a thick-walled vessel such as a blister pack, a tape, fiber materials such as fibers, woven fabrics, non-woven fabrics, and materials for filtration, a net, and a foam, etc.

EP 0 984 039 A1

## Description

TECHNICAL FIELD

The present invention relates to a lactone resin irradiated by ionizing radiation, a lactone-contained resin composition containing at least any one of other biodegradable resins and additives for resins, a molded article from the composition, and a film. The molded article and the film include pellets; a thin-walled molded article such as a blister pack, a tray, a cup, and a partition for the a wrapping box; a degradable thick-walled vessel which is employed as a vessel for foods, toiletry products, medical products, and a vessel for transferring general goods and for cultivating plants; tapes and bands; fibrous materials for fibers, woven fabrics, non-woven fabrics, and a material for filtration; nets; films and sheets such as a degradable bag for garbages, a degradable mulch film for agriculture, a degradable sheet for agriculture; and a foam, etc. The molded article and film obtained are excellent in physical properties such as moldability, mechanical properties, and heat resistance in addition to degradability.

BACKGROUND ART

Hitherto, there have been employed synthetic plastics such as polyethylene, polypropylene, polyvinyl chloride, polystyrene, polyamide, and polyester as general materials for industries. However, the synthetic plastics are chemically stable and, since there are not almost decomposed even when being left in natural circumstances after the uses thereof, dumping is becoming a social problem.

As a method for treating without remaining waste synthetic plastics, although burning is most convenient, an incinerator is often damaged by high calories in burning of synthetic resins, and further, and since harmful substances are occasionally produced during burning, it is not always regarded as a preferred method.

For that reason, instead of the above-mentioned plastics, a variety of biodegradable resins have been investigated.

Herein, the biodegradable resins mean a resin which is not decomposed during the use of a molded article therefrom under usual living circumstances as well as polyethylenes, but biochemically decomposed to an extent of not remaining an original shape by microorganisms such as bacteria and fungi, etc., or broken down by moisture, heat, and sunlight in the case that it is dumped and laid in natural circumstances such as in active sludge, soils, composts, and water, and occasionally, decomposed until carbon dioxide and water.

As the biodegradable resins, there have been known aliphatic polyesters such as a poly-ε-caprolactone (hereinafter, occasionally shortened into Polycaprolactone or PCL), a polyhydroxybutyrate/a polyhydroxyvalirate copolymer, and a polylactic acid; a modified starch/modified polyvinylalcohol (PVA) composition and a photodegradable polymer having carbonyl groups, etc. Of those, there are most looked upon the aliphatic polyesters such as a poly-ε-caprolactone, a polyhydroxybutyrate/a polyhydroxyvalirate copolymer, and a polylactic acid in view of a complete biodegradability.

Although the lactone resins such as the Polycaprolactone are biodegradable and an environmental adaptable resin, since a melting point is relatively low, for example, it is approximately 60°C in the Polycaprolactone, heat resistance and tensile strength are insufficient, and it is problematic in film moldability.

Accordingly, since it includes a limitation in a practical use as a mulch film for agriculture and a wrapping film under natural circumstances at high temperatures, it cannot be employed without any modifications as the above-mentioned films.

JP-A-08150658 Official Gazette proposes specified molding conditions in the case of molding a resin composition composed of starch-EVOH-Polycaprolactone-based resin, and it discloses an inflation film having an excellent heat-sealing property, mechanical strength, and moisture resistance, etc. However, there is a problem that EVOH does not have a complete biodegradability.

JP-A-08188706 Official Gazette proposes a biodegradable plastic film obtained by molding 100 parts by weight of a composition composed of 80-100% by weight of Polycaprolactone which is a biodegradable resin and 20-0% by weight of a biodegradable linear chain polyester-based resin produced by microorganisms, and 0.3-0.8 part by weight of a lubricant. However, it includes a problem in a mechanical strength during molding films. Accordingly, it is difficult to mass-produce films, and even a bag for garbages prepared from the films is thrown into a compost apparatus together with foods wastes, it takes enough 100 days for biochemical decomposition, accordingly, decomposition rate is not always quick.

Further, JP-A-08011206 Official Gazette proposes the use of a downward die for preparing an inflation film using a biodegradable resin. However, it only proposes a downward extrusion, and there is not shown a method for solving a problem based on characteristics of a biodegradable resin itself.

Accordingly, it is not a fundamental method for solving a problem during the preparation of an inflation film of the biodegradable resin.

Mulch films for agriculture or mulchsheets for agriculture (hereinafter, collectively referred as a mulch film for agriculture) are employed for the purpose of an improvement in harvesting amount of farm products by an action such as a control for an abrupt change of soil temperatures, a growth control of weeds, and gradual discharge of nutriment, etc.

Heretofore, as the mulch film for agriculture, there have been mainly employed general-purpose resins such as a polyolefine typified by a polyethylene, a vinyl chloride resin, and an ethylene-vinyl acetate copolymer colored by black, silver, and a white dye or pigment.

Although the resins are low in price, and excellent in weatherability, it is required to recollect thereof after the use because of being substantially nothing of biodegradability.

However, since films after the use are dirty, it is difficult to recollect and to reuse thereof. In the case of dumping thereof, although there is only a method of burning, there is caused a new problem such as an anxiety of injury of an incinerator by plastics and generation of harmful substances. In order to solve the problem, as a result of an investigation of a mulch film which is not required to recollect owing to be completely decomposed by microorganisms in soil, and in which strength lowers after the use for a necessary time of period as a mulch film for agriculture, and it becomes easy to plow into soil, there has become proposed the use of a variety of biodegradable resins. Further, even though it is difficult to biochemically decompose the biodegradable resins at the surface of soil as well as other general resins, it is possible to give brittleness by lowering weatherability against natural conditions such as temperature, humidity, and light, and whereby, it is possible to relatively freely control the strength of films after the use for the above-mentioned time of period. Accordingly, it is thought that the biodegradable resins are preferred as a mulch film for agriculture.

JP-A-09235360 and JP-A-09233956 Official Gazettes propose a film for agriculture such as a mulch film for agriculture in which there is employed an aliphatic polyester-based copolymer having a fixed molecular weight composed of (1) an aliphatic oxycarboxylic acid unit represented by -O-R$^1$-CO- (R$^1$ is a divalent aliphatic hydrocarbon group), (2) a diol unit represented by -O-R$^2$-O- (R$^2$ is a divalent aliphatic or cycloaliphatic hydrocarbon group), and (3) an aliphatic dicarboxylic acid unit represented by -OC-R$^3$-CO- (R$^3$ is a direct bond or a divalent aliphatic hydrocarbon group).

However, there is not specified an arrangement structure of respective units in polymers, and there is a problem in capability itself of supplying a raw resin in which a stable property for film is required.

Further, JP-A-07177826 Official Gazette discloses a film for agriculture in which plasticizers and ultra violet ray absorbents are mixed into a polylactic acid or a copolymer of lactic acid with a hydroxy carboxylic acid. However, as shown in all examples, since a preferred film must be stretched in order to give strength, it is not always preferred as a film for agriculture which requires productivity by quick molding and general purpose uses.

Still further, there have been known a sheet for agriculture employed as a roofing sheet for greenhouse cultivation, a mulch sheet for covering soil, and a covering sheet for a bed for seedings, which are employed in order to improve a harvesting technology of farm products such as, particularly, rice and fruits, and which are thicker-walled than the above-described films.

In the conventional sheet for agriculture, general-purpose resins such as a polyolefine typified by a polyethylene, a vinyl chloride resin, and an ethylene-vinyl acetate copolymer have been mainly employed in a state of transparency or colored by black, silver, and a white dye or pigment.

Since the sheets have a broad surface, removal of spots, keeping, and reuse after the use are troublesome, and tear-propagation resistance is not sufficient, the sheets often break after the use. Accordingly, those are apt to be always dumped when employed. In the dumping, there are same problems as in the above-mentioned films.

For that reason, there has been investigated the utilization of a caprolactone resin, etc., in addition to a completely biodegradable cellulose-based paper. In general, since various strength including wet strength is low in papers themselves, those cannot be used as it is, and there has been proposed a combination with a variety of biodegradable resins. However, since the biodegradable resins themselves are also poor in strength compared to the conventional general-purpose synthetic resins, those cannot be widely employed as sheets for agriculture in the existing circumstances.

Heretofore, although shrink film (it means a stretch film for wrapping foods and a shrink film for wrapping general goods) which has been employed for wrapping has been mainly prepared from an oriented polyvinylchloride resin, polyvinylidene chloride resin, polyethylene resin, polyethylene terephthalate resin, and polystyrene-based resin, it includes the same problems as in the above descriptions in relation to dumping.

Heretofore, although there have been employed resins such as polyethylene, polypropylene, polyethylene terephthalate, polyvinylchloride, ethylene-vinyl acetate copolymer as a vessel or a cover for a plastic-made blister pack, the resins include the same problems as in the above descriptions in relation to dumping in spite of excellent moldability, transparency, and water resistance.

Further, although there have been also developed vessels made from a copolymer of a polyhydroxybutyrate with a polyhydroxy valirate which is effective in degradability, and a starch-based degradable plastics, etc., those are low in strength and rigidity, and those include possibility of becoming unpreferably moldy under usual uses and preservation. Still further, the blister pack made from the materials shows a lower transparency in the vessels and covers compared to the above-mentioned general purpose synthetic resins. Accordingly, since it is difficult to identify contents contained in the vessels, the materials are not preferred for the uses.

Although there has been developed a polylactic acid or a copolymer of lactic acid with other hydroxycarboxylic acid as a polymer having an excellent biodegradability, those are not still completed as a material for blister packs in view of moldability, transportation and storage applicability, and mechanical strength, etc.

Heretofore, although there have been employed resins such as polyethylene terephthalate (PET) resin, a polyester resin, a polyvinylchloride, and a polyolefine resin, etc., for a thick-walled vessel which is employed for bottles for beverages, bottles for cosmetics, and a flowerpot, etc., the resins include the same problems as in the above descriptions.

JP-A-06276862 Official Gazette discloses a vessel prepared by a biodegradable resin such as an aliphatic polyester, polyglycolic acid, polylactic acid, and polycaprolactone.

However, it merely discloses only the use as a biodegradable resin, and any improvements are not made in the polycaprolactone.

JP-A-08058797 Official Gazette discloses a vessel prepared by a stretching blow molding in which polylactic acid and an aliphatic polyester, etc. are employed. However, since it is insufficient in mechanical strength for the purpose of attaining a shift to light weight, it must be further reinforced around by a shrink film composed of a biodegradable resin.

Heretofore, there have been mainly developed natural materials such as papers, synthetic resins such as a polyolefine resin, a polyvinylchloride, a polyester resin, and a polyamide resin as tapes employed for packing, bands, base materials for adhesive tapes, labels, and other tapes for a variety of materials in industries.

However, since the natural materials such as papers are weak in water, those are limited in utilization scopes. Tapes prepared by the synthetic resins include various problems as described hereinabove in relation to dumping.

Heretofore, in fibrous materials such as ropes, nets, woven fabrics, non-woven fabrics, and materials for filtration, a high tensile strength and weatherability have been getting mainly required in order to be proof against a long-term use under natural circumstances. As the fibrous materials and adhesives between fibers, although there have been employed polyamide, polyester, vinylon, polyolefine, polyvinylchloride, polyvinylidene chloride, fluoropolyolefine, polyphenylene sulfide, and polyaramide, etc., those include the problems described hereinabove in relation to dumping.

Of those, as a method for solving the problems in relation to fibers, although there have been proposed the use of a polysaccharide, a protein, and an aliphatic polyester which are a biodegradable polymer, the use of a polyethylene mixed with starches, and the use of products by microorganisms, etc., there have been problems of difficulty and complexity in a spinning method, insufficient strength, high costs of materials, incomplete biodegradability as a whole, slow crystallization rate, and unsuitableness in the preparation of multifilaments.

As a new method for solving in place of those, in addition to biodegradable fibers having a tensile strength of not less than 2.0 g/d which comprise a polyester resin composition in which 1-200 parts by weight of a polycaprolactone is mixed with 100 parts by weight of an aliphatic polyester, there are proposed biodegradable fibers having a tensile strength of not less than 2.0 g/d containing not less than 40% by weight of a polyester resin composition in which 1-200 parts by weight of the polycaprolactone is mixed with 100 parts by weight of the same aliphatic polyester (JP-A-08029990 Official Gazette).

However, the tensile strength is 4-5.5 g/d in the fibers described herein, and it is left door open to problems to be further improved which include that although biodegradability is improved for the time being because retention ratio of tensile strength becomes no more than 50% as a result of an experiment in which fibers are laid underground for two months and taken out, it does not attain a practically sufficient strength of not less than 6.0 g/d, and it does not attain 1 month which is a practical period in laying underground because of requiring a long period of two-months for biodegradation.

On the other hand, as the non-woven fabrics, there have been proposed the use of biodegradable fibers such as animal natural fibers, vegetable fibers, cellulose-based synthetic fibers, and cellulose-based semi-synthetic fibers, and the use of adhesives for binding between fibers in order to improve a tear strength by bonding fibers themselves each other. However, the adhesives do not show biodegradability. Accordingly, the problems are not completely solved.

In order to solve the problems, it is proposed to allow a specified polymer, that is, a polycaprolactone having a number average molecular weight of not less than 10,000 contain as a binder (JP-A-08337955 Official Gazette).

However, in the case, it is left door open to problems to be further improved which include that although a tear strength is improved until 1.6-2 times or so for the time being without loss of biodegradability (decision by an observation of outer appearance after immersing in a river for six months), it does not attain a practically sufficient tear strength of 4.0 kg/cm, and biodegradability is observed for a long time of period of 6 months which is not a practical immersion time of period of 1 month.

Further, as the materials for filtration, there are proposed a lump of fibers, woven fabrics, non-woven fabrics, and membranes having pores, etc., in which there is employed a biodegradable resin, for example, a polycaprolactone alone in place of polyolefines, polyamides, and polyesters, etc. which are not biodegradable.

However, a change of biodegradability is shown by streaming river water for 12 months and then after laying underground for 24 months, and it is quite beyond 1 month (laying underground) after the practical use period of 12 months (river water) for observation of the change. Accordingly, those are not looked upon as materials for filtration prepared by fibrous materials which are satisfied in biodegradability, and there has been desired an appearance of more excellent fibrous materials in view of this point.

Heretofore, in nets for agriculture such as a net for growing plants, nets for fishery such as fishing nets, and nets for civil engineering in order to reinforce the foundation, there have been employed resins such as a nylon, a polyester, a polyolefine, and a polyvinylchloride, etc.

As the nets, there are nets which are woven by employing fibers or fiber strands composed of the above-mentioned resins as warps and wefts, nets woven by tapes, and net-like sheets or non-woven fabrics having holes.

The nets prepared by such the resins are employed by laying in the natural world such as fields, lakes and marshes, seas, soil, and rivers, and those are dumped after uses, resulting in that those do damage animals and plants, and natural circumstances, and in the case that those are dumped, the above-mentioned problems are caused.

Until now, there has been not present a biodegradable net prepared by resins which can decompose under natural circumstances.

Therefore, in order to solve the problems, biodegradable resins are recently paid attention.

Heretofore, there have been widely employed foam which are polyolefine-based, polyurethane-based, and polyamide-based as a heat insulation material and a cushion material.

Particularly, since the foam can be prepared by a small amount of resins, those are utilized as a light weight, and cheap vessels for foods, a heat insulation material, and a cushion material.

However, the foam prepared by such the resins are bulky in dumping, and cause the above-mentioned problems.

JP-A-07188443 Official Gazette teaches an aliphatic polyester resin which is a thermoplastic and biodegradable resin. However, it is difficult to highly-polymerize the aliphatic polyester resin because of an action of water which is caused during polymerization. Accordingly, since it is difficult to mold a foam, a means is also proposed for highly-polymerizing.

Further, JP-A-04189822 and JP-A-04189823 Official Gazettes disclose a method for the preparation of a high molecular weight polyester resin in which a diisocyanate having a fixed amount of isocyanate groups is added to a saturated polyester which is a compound having a number average molecular weight of not more than 5,000 and hydroxyl groups at terminals, and in which acid components are a compound having a carbon number of 3 or a mixture thereof in a melting state higher than melting points.

As described hereinabove, in spite of an excellent biodegradability in the aliphatic polyester, it is difficult to highly-polymerize in the aliphatic polyester resin alone in view of an industrial production technology, and even though it is possible to highly-polymerize by introducing other components, there is not still known an aliphatic polyester resin-based foam having an excellent degradability, moldability and mechanical properties.

As described hereinabove, in the usual biodegradable resins, there has not been known a resin well-balanced between degradability, moldability and mechanical properties.

In order to prepare a molded article using a resin, the resin or a resin composition is usually molded into a pellet state.

Preparation of resin pellets for molding is carried out in order to avoid bridging and scattering powders in air in the case of feeding into an extruder at a finely-powdered state, and it is carried out for the purpose of capability of molding while uniformly mixing with additives, and further, it is carried out as a countermeasure of problems caused by fine powders produced in crushing and reusing of waste molded articles, etc.

On the other hand, crosslinking, etc. by ionizing radiation is carried out for the purpose of an improvement of polymers. As the ionizing radiation industrially and widely employed for crosslinking, there are known γ-ray by cobalt 60 and an electron beam by an accelerator.

Particularly, for uses requiring polymers having a high strength and high melt viscosity, a high crosslinking is required.

In the case, since the crosslinking by ionizing radiation is mainly caused in a noncrystalline region of the polymers, in the case of irradiation in the vicinity of the room temperatures, there is required a large amount of irradiation quantity such as, for example, 200 kGy. Contrarily, in the case of an treatment in the vicinity of a melting point, there is a tendency that strength is lowered because of formation of a large amount of voids.

Accordingly, even though there are followed conventional irradiation conditions by ionizing radiation and a lactone resin is crosslinked, practical materials cannot be obtained.

The present invention attracts attention to the presence of a limit in utilization to wrapping materials such as films because of a relatively low melting point, for example, 60°C in a polycaprolactone in spite of a biodegradable resin and an environmental adaptable resin even though it is dumped. The present invention aims at an enlargement in utilization of the lactone resin by an improvement in heat resistance and tear strength, which is attained by introduction of a network structure by an irradiation of specified ionizing radiation.

Accordingly, under the technical background, the purpose of the present invention is to provide a resin composition which is excellent in degradability, moldability, and mechanical properties through the use of a lactone resin.

Also, the other purpose of the present invention is to provide pellets of the above-mentioned resin composition in order to give an excellent moldability.

Also, the other purpose of the present invention is to provide molded articles prepared from the above-mentioned resin composition.

Also, the other purpose of the present invention is to provide films prepared from the above-mentioned resin composition.

Also, the other purpose of the present invention is to provide bags for garbages, net-made bags for draining water in garbages, and bags for compost garbages, which have biodegradability (degradability).

Also, the other purpose of the present invention is to provide mulch films for agriculture which have conventionally same or more excellent biodegradability in soil, and which have an appropriate strength by which the Mulch films after the use for a fixed period can be plowed into soil, together with an improved heat resistance, improved moldability, and improved practicability.

Also, the other purpose of the present invention is to provide a shrink film which is well-balanced in view of moldability of the shrink film, physical properties in use, biochemical degradability after dumping, etc.

Also, the other purpose of the present invention is to provide a sheet-like product, a sheet-like molded article, and a sheet for agriculture which can be used in general purposes in consideration of a composite with papers, etc., and which are also excellent in physical properties such as tensile strength and tear strength.

Also, the other purpose of the present invention is to provide a thin-walled molded article such as a blister pack, a tray, a cup, partition for packing box which are practical in view of moldability, transportation and storage applicability, and mechanical strength, etc. in addition to an excellence in biodegradability under natural circumstances.

Also, the other purpose of the present invention is to provide a degradable thick-walled vessel employed as a vessel for liquid-state, cream-state, and solid-state foods, toiletry goods, medical goods, a container for transporting general goods, a pot for cultivating plants which is practical in view of moldability, transportation and storage applicability, and mechanical strength, etc. in addition to an excellence in biodegradability under natural circumstances.

Also, the other purpose of the present invention is to provide a degradable tape and band, etc., which are employed for wrapping and packing, etc.

Also, the other purpose of the present invention is to provide a fibrous material which has a sufficiently high strength, particularly, tensile strength and tear strength in the uses thereof as fibers, non-woven fabrics, and materials for filtration and, moreover, in the case that it is not reused after the uses, it is efficiently biodegradable by leaving in a natural world or by laying underground for a short time of period.

Also, the other purpose of the present invention is to provide a biodegradable net which is well-balanced in moldability of the net, physical properties in the use, and biochemical degradability after dumping, etc.

Also, the other purpose of the present invention is to provide a biodegradable resinous foam which is excellent in moldability of the net, physical properties in the use, and biochemical degradability after dumping, etc.

DISCLOSURE OF THE INVENTION

The inventors of the present invention, as a result of an intensive investigation for solving the above-mentioned problems, have found out that pellets, molded articles, and films, etc., in which there is employed a composition containing a lactone resin irradiated by ionizing radiation, are excellent in degradability, moldability, heat resistance, and mechanical properties (for example, tear strength, particularly, an improvement of a value in a traversing direction (TD)) by formation of crosslinking structures in the lactone resin through an irradiating process of a lactone resin such as a polycaprolactone or a composition which contains the lactone resin using a specified ionizing radiation, and the present invention has been completed.

That is, No. 1 of the present invention relates to a polycaprolactone-contained resin composition containing a polycaprolactone resin irradiated by ionizing radiation, and at least any one of the other biodegradable resin and an additive for resins.

No. 2 of the present invention relates to a polycaprolactone-contained resin composition described in No. 1 of the present invention, wherein the polycaprolactone resin has branched structures or a gel fraction of 0.01-90%.

No. 3 of the present invention relates to a polycaprolactone-contained resin composition described in No. 2 of the present invention, wherein the other biodegradable resin is an aliphatic polyester, a biodegradable cellulose ester, a polypeptide, a polyvinyl alcohol, and a mixture thereof.

No. 4 of the present invention relates to a polycaprolactone-contained resin composition described in No. 3 of the present invention, wherein the weight ratio of the polycaprolactone resin/the synthetic aliphatic polyester resin is 5/95-70/30.

No. 5 of the present invention relates to a polycaprolactone-contained resin composition described in No. 1 of the present invention, wherein the additive for resins is a plasticizer, a thermal stabilizer, a lubricant, an anti-blocking agent, a nucleating agent, a photo-decomposing agent, a biodegradation accelerator, an antioxidant, an ultraviolet stabilizer, an anti-static agent, a flame retardant, a flowing agent, an antibacterial agent, a deodorant, fillers, a coloring agent, and a mixture thereof.

No. 6 of the present invention relates to a molded article prepared by extrusion molding, injection molding, blow molding, calendar molding, compression molding, transfer molding, thermal molding, flow molding, and or lamination molding of a polycaprolactone-contained resin composition described in any one of Nos. 1-5 of the present invention.

No. 7 of the present invention relates to pellets which comprise a polycaprolactone-contained resin composition described in any one of Nos. 1-5 of the present invention.

No. 8 of the present invention relates to a film which comprises molding a polycaprolactone-contained resin composition described in any one of Nos. 1-5 of the present invention.

No. 9 of the present invention relates to a film described in No. 8 of the present invention which is monoaxially or biaxially stretched.

No. 10 of the present invention relates to a degradable bag for garbages molded from a polycaprolactone-contained resin composition described in any one of Nos. 1-5 of the present invention.

No. 11 of the present invention relates to a degradable Mulch film for agriculture molded from a polycaprolactone-contained resin composition described in any one of Nos. 1-5 of the present invention.

No. 12 of the present invention relates to a degradable shrink film molded from a polycaprolactone-contained resin composition described in any one of Nos. 1-5 of the present invention.

No. 13 of the present invention relates to a sheet-like molded article molded from a polycaprolactone-contained resin composition described in any one of Nos. 1-5 of the present invention.

No. 14 of the present invention relates to a sheet-like molded article wherein there is impregnated into paper a non-aqueous solution, an emulsion, or slurry of a polycaprolactone-contained resin composition described in any one of Nos. 1-5 of the present invention.

No. 15 of the present invention relates to a degradable sheet for agriculture which comprises a sheet-like molded article described in No. 14 of the present invention.

No. 16 of the present invention relates to a sheet-like molded article wherein a polycaprolactone-contained resin composition described in any one of Nos. 1-5 of the present invention is manufactured by mixing with fibrous paper.

No. 17 of the present invention relates to a sheet-like molded article wherein a film described in No. 8 of the present invention is laminated.

No. 18 of the present invention relates to a degradable thin-walled molded article which comprises molding a polycaprolactone-contained resin composition described in any one of Nos. 1-5 of the present invention.

No. 19 of the present invention relates to a degradable thin-walled molded article described in No. 20 of the present invention, wherein tensile elasticity (JIS K7127) of the molded article is 100-800 N/mm$^2$, impact strength (JIS K7211) of the molded article is 10-50 kg • cm, or a glass transition temperature of the resin composition is -60-20°C.

No. 20 of the present invention relates to a degradable tape which comprises molding a polycaprolactone-contained resin composition described in any one of Nos. 1-5 of the present invention.

No. 21 of the present invention relates to a degradable tape described in No. 20 of the present invention, wherein an uneveness is formed at the surface of one side or both sides.

No. 22 of the present invention relates to a degradable tape described in No. 20 of the present invention, wherein an adhesive layer, a mold-release agent layer and/or a heat-seal layer are formed at the surface of one side or both sides.

No. 23 of the present invention relates to a degradable thick-walled vessel which comprises molding a polycaprolactone-contained resin composition described in any one of Nos. 1-5 of the present invention.

No. 24 of the present invention relates to a biodegradable fiber which comprises molding a polycaprolactone-contained resin composition described in any one of Nos. 1-5 of the present invention.

No. 25 of the present invention relates to a biodegradable woven fabric which comprises a biodegradable fiber described in No. 24 of the present invention.

No. 26 of the present invention relates to a biodegradable non-woven fabric which comprises molding a polycaprolactone-contained resin composition described in any one of Nos. 1-5 of the present invention.

No. 27 of the present invention relates to a biodegradable non-woven fabric which comprises at least one kind of fibers selected from the group consisting of natural animal fibers, natural vegetable fibers, regenerated fibers and semisynthetic fibers, and a polycaprolactone-contained resin composition described in any one of Nos. 1-5, characterized in that polycaprolactone in the polycaprolactone-contained resin composition has a number average molecular weight of not less than 10,000 which is employed as a binder for the fibers.

No. 28 of the present invention relates to a biodegradable non-woven fabric described in No. 26, wherein the biodegradable non-woven fabric contains a biodegradable cellulose acetate having a substituted degree of not more than 2.1.

No. 29 of the present invention relates to a biodegradable material for filtration which comprises a mass of biodegradable fibers described in No. 24 of the present invention, a biodegradable woven fabric described in No. 25 of the present invention, and a biodegradable non-woven fabric described in any one of Nos. 26-28 of the present invention.

No. 30 of the present invention relates to a biodegradable coated material for filtration which comprises metallic fibers and/or wires, which are eroded in natural circumstances coated with a polycaprolactone-contained resin composition described in any one of Nos. 1-5.

No. 31 of the present invention relates to a biodegradable net which comprises a film described in No. 8, wherein the film has a plurality of holes.

No. 32 of the present invention relates to a biodegradable net, wherein fibers described in No. 24 and/or tapes described in No. 22 are employed as warps and/or wefts.

No. 33 of the present invention relates to a biodegradable resinous foam which comprises foaming a composition containing a polycaprolactone-contained resin composition described in any one of Nos. 1-5 and a foaming agent.

No. 34 of the present invention relates to a biodegradable foam described in No. 33, wherein the cell-size of the foam ranges in 0.01-1 cm $\varnothing$.

Further, the present invention also discloses the followings.

(1) A lactone-contained resin composed of a lactone resin alone or a lactone resin and other biodegradable resin, which is characterized in that the lactone resin which is a constructing component in the lactone-contained resin is irradiated alone or together with at least one of other constructing components by ionizing radiation.

(2) A lactone-contained resin described in (1), wherein the lactone resin is a homopolymer of ε-caprolactone, 4-methylcaprolactone, 3,5,5-trimethylcaprolactone, 3,3,5-trimethylcaprolactone, β-propiolactone, γ-butyrolactone, δ-valerolactone, and enantolactone, or a copolymer of at least two monomers, and or a mixture of the homopolymers or the copolymers,

(3) A lactone-contained resin described in (1)-(2), wherein the lactone resin has a gel fraction of 0.01-90%.

(4) A lactone-contained resin described in any one of (1)-(3), wherein the other biodegradable resin is a synthetic polymer, a natural polymer, or a mixture thereof.

(5) A lactone-contained resin described in (4), wherein the synthetic polymer is an aliphatic polyester, a biodegradable cellulose ester, a polypeptide, a polyvinyl alcohol, or a mixture thereof.

(6) A lactone-contained resin described in (4), wherein the natural polymer is starches, celluloses, paper, pulp, cotton, hemp, wool, silk, leather, carrageenan, a chitin-chitosan component, a natural linear chain polyester-based resin, or a mixture thereof.

(7) A lactone-contained resin composition which comprises a lactone-contained resin described in any one of the above-mentioned (1)-(6) and an additive for resins.

(8) A lactone-contained resin composition described in (7), wherein the additive for resins is a plasticizer, a heat stabilizer, a lubricant an anti-blocking agent, a nucleating agent, photodegradable agent, a biodegradable accelerator, an antioxidant, an ultraviolet ray absorbent, an antistatic agent, a flame retardant, a flowing drop agent, an antibacterial agent, a deodorant, fillers, a coloring agent, or a mixture thereof.

(9) A molded article which comprises molding a lactone-contained resin described in any one of (1)-(6) or a lactone-contained resin composition described in any one of (7)-(8).

(10) A molded article described in (9) wherein molding is extrusion molding, injection molding, blow molding, calendar molding, compression molding, transfer molding, thermal molding, flow molding, and or lamination molding.

(11) A lactone-contained resin described in (1), wherein the lactone resin has a gel fraction of 0.05-10%.

(12) Pellets which comprise molding a lactone-contained resin described in any one of (1)-(6) or a lactone-contained resin composition described in any one of (7)-(8).

(13) A film which comprises molding a lactone-contained resin described in any one of (1)-(6) or a lactone-contained resin composition described in any one of (7)-(8) by inflation molding, T-die molding, or calendar molding.

(14) A film described in (11) which is monoaxially or biaxially oriented.

(15) A film described in any one of (13) or (14), wherein the ratio of the fatty acid amide in the lactone resin, the synthetic aliphatic polyester resin, and the fatty acid amide is 0.2-5 parts by weight based on 100 parts by weight of total of the lactone resin and the synthetic aliphatic polyester resin.

(16) A film described in (15), wherein the weight ratio of the lactone resin/the synthetic aliphatic polyester resin is 5/95-70/30.

(17) A film described in any one of (16) or (17), wherein 0.1-3 parts by weight of a liquid lubricant is further contained based on 100 parts by weight of total of the lactone resin and the synthetic aliphatic polyester resin.

(18) A film described in any one of (15)-(17), wherein 0.1-3 parts by weight of a finely-powdered silica is further contained based on 100 parts by weight of total of the lactone resin and the synthetic aliphatic polyester resin.

(19) A film described in any one of (15)-(18), wherein 10-80 parts by weight of starch is further contained based on 100 parts by weight of total of the lactone resin and the synthetic aliphatic polyester resin.

(20) A degradable bag for garbages which comprises a film described in any one of the above-described (15)-(19).

(21) A degradable bag for garbages described in (20), which is a water-drainable net-made bag for garbages or a compost bag for garbages.

(22) A degradable mulch film for agriculture which comprises a film described in any one of the above-described (15)-(19).

(23) A degradable mulch film for agriculture described in (22), wherein an acrylic resin is coated over at least one surface.

(24) A degradable shrink film which comprises a film described in any one of (15)-(19).

(25) A degradable shrink film described in (24), wherein the plasticizer is an ester of an aliphatic dibasic acid, a phthalate, a hydroxy polyvalent carboxylate, a polyester-based plasticizer, an ester of a fatty acid, an epoxide-based plasticizer, or a mixture thereof.

(26) A degradable shrink film described in (24) characterized in that the heat stabilizer is a salt of an aliphatic carboxylic acid.

(27) A degradable shrink film described in (24), wherein the lubricant is paraffins, hydrocarbon resins, higher fatty acids, oxyfatty acids, fatty acid amides, alkylenebis fatty acid amides, fatty acid esters, aliphatic ketones, fatty acid esters of a lower alcohol, fatty acid esters of a polyglycol, aliphatic alcohols, polyvalent alcohols, polyglycols, polyglyceroles, modified silicones, metallic soaps, and a mixture thereof.

(28) A degradable shrink film described in (24), which is employed for wrapping foods, for wrapping goods, and as materials for house moving.

(29) A sheet-like composition which comprises molding a lactone-contained resin described in any one of the above-described (1)-(6) or a lactone-contained resin composition described in any one of (7)-(8) into a sheet-like article.

(30) A sheet-like molded article in which a nonaqueous solution, an emulsion, or a slurry of a lactone-contained resin described in any one of the above-described (1)-(6) or a lactone-contained resin composition described in any one of (7)-(8) is impregnated into paper.

(31) A sheet-like molded article characterized in that a lactone-contained resin described in any one of the above-described (1)-(6) or a lactone-contained resin composition described in any one of (7)-(8) is manufactured by mixing with fibrous papers.

(32) A sheet-like molded article characterized in that there is laminated a film which comprises a lactone-contained resin described in any one of the above-described (1)-(6) or a lactone-contained resin composition described in any one of (7)-(8).

(33) A sheet-like molded article which comprises powder and/or fibrous materials of a lactone-contained resin described in any one of the above-described (1)-(6) or a lactone-contained resin composition described in any one of (7)-(8) and a mixture of powder and/or fibrous materials except the lactone resin.

(34) A sheet-like molded article characterized in that a lactone-contained resin described in any one of the above-described (1)-(6) or a lactone-contained resin composition described in any one of (7)-(8) is coated over a sheet-like article comprising materials except the lactone resin.

(35) A sheet for agriculture which comprises a sheet-like molded article described in the above-described (30).

(36) A molded article described in (10) wherein the molded article is a blister pack, a tray, a cup, or a partition for a packing box.

(37) A molded article described in (36), wherein a tensile elasticity (JIS K7127) is 100-8 N/mm$^2$, or an impact strength (JIS K7211) is 10-50 kg-cm in a sheet which constructs the molded article described in the above-described (36).

(38) A molded article described in (36), wherein a glass transition temperature is -60 to 20°C in a resin which constructs the molded article described in the above-described (36).

(39) A molded article described in (10), wherein the molded article is a tape.

(40) A molded article described in (39), which is a monoaxially or biaxially oriented degradable tape.

(41) A molded article described in (39), which is a degradable tape having the uneven over the one or both surface.

(42) A molded article described in (39), which is a degradable tape having an adhesive layer, a layer of a release agent and/or a heat seal layer over the one or both surface.

(43) A molded article described in (39), which is a degradable tape reinforced by biodegradable fibers.

(44) A molded article described in (39), which is a degradable tape to be employed for packing, an adhesive tape, and showing.

(45) A molded article described in (10), wherein the molded article is a degradable thick-walled vessel.

(46) A molded article described in (45), wherein the molded article is a degradable thick-walled vessel obtained by extrusion molding, injection molding, blow molding, compression molding, transfer molding, thermal molding, flow molding, or lamination molding.

(47) A molded article described in (45), which is a degradable thick-walled vessel to be employed as liquid-state, cream-state, or solid-state foods, toiletries, medicines, for transporting general goods, and vessels for cultivating plants.

(48) A biodegradable fiber which comprises molding a lactone-contained resin described in any one of the above-described (1)-(6) or a lactone-contained resin composition described in any one of (7)-(8).

(49) A biodegradable non-woven fabric characterized in that a polycaprolactone is irradiated by ionizing radiation in the biodegradable non-woven fabric which comprises at least one or more kinds of fibers selected from the group consisting of an animal natural fiber, a vegetable natural fiber, a regenerated fiber, and a semi-synthetic fiber, and which contains a polycaprolactone having a number average molecular weight of not less than 10,000 as a binder.

(50) A biodegradable non-woven fabric described in (49), wherein the polycaprolactone to be contained as a binder is a polycaprolactone irradiated by ionizing radiation to be contained as a binder in a polycaprolactone impregnated into the non-woven fabric.

(51) A biodegradable non-woven fabric described in (49), wherein the biodegradable non-woven fabric contains a biodegradable cellulose acetate having a substitution degree of not more than 2.1.

(52) A biodegradable material for filtration characterized in that a polycaprolactone is irradiated by ionizing radiation in a biodegradable material for filtration which comprises a polycaprolactone or other biodegradable resins containing thereof.

(53) A biodegradable material for filtration described in (52), wherein the material for filtration is a mass of fibers, a woven fabric, a non-woven fabric, and a membrane having pores.

(54) A biodegradable material for filtration characterized by the use of a massive body, a woven fabric, and a non-woven fabric which comprises metallic fibers and/or wires coated by a polycaprolactone irradiated by ionizing radiation or a biodegradable resin composition containing thereof, which is eroded in natural circumstances.

(55) A biodegradable net characterized in that it is molded into a film described in the above-described (13), and the film has a great many of holes.

(56) A biodegradable net characterized in that fibers described in the above-described (48) are employed as warps and/or wefts in the net.

(57) A biodegradable net characterized in that tapes described in the above-described (39) are employed as warps and/or wefts in a net.

(58) A biodegradable net described in any one of the above-described (55)-(57), which is employed for agriculture, fishery, civil engineering, gardening, cushions for fruits, and daily necessaries or medical supplies.

(59) A degradable resinous foam which comprises foaming by adding a foaming agent to a lactone-contained resin described in any one of the above-described (1)-(6) or a lactone-contained resin composition described in any one of the above-described (7)-(8).

(60) A degradable resinous foam described in (59), wherein the size of air bubbles ranges in 0.01-1 cm $\varnothing$.

(61) A degradable resinous foam described in (59), which is employed as a cushion material, a heat insulation material, wrapping material, an internally-decorative material, a furniture, bedclothes, materials for agriculture, materials for fishery, materials for voyaging, materials for cars, materials for civil engineering and constructing, materials for living life, sporting goods, and spongy brushes.

(62) A degradable resinous foam described in (61), which is a box for wrapping foods having a foaming magnification of 1.5-6 times.

(63) A degradable resinous foam described in (61), which is a tray for foods, a heat insulation material, and a cushion material which have a foaming magnification of 3-25 times.

(64) A lactone-contained resin composition described in (1) characterized in that irradiation by ionizing radiation is carried out by cooling to not more than a melting point in a state not attaining to crystallization of a lactone resin after melting the lactone resin.

## BEST MODE FOR CARRYING OUT THE INVENTION

Hereinafter, a mode for carrying out the present invention will be illustrated.

In the present invention, "the lactone-contained resin composition" is a composition of a lactone resin with other components, and the other components are a biodegradable resin other than the lactone resin, an additive for resins, and other components (for example, an ethylene/vinyl acetate resin which is added in an extent of not preventing biodegradability and degradability, and an agent for modifying starches which is added into starches) which are optionally added.

Accordingly, "the polycaprolactone-contained resin composition" is a composition in which the lactone resin in the above-described lactone-contained resin composition is polycaprolactone. It is to be noted that the polycaprolactone includes not only a homopolymer of ε-caprolactone but also a copolymer of ε-caprolactone which is a primary monomer with lactone monomers which are described hereinafter or monomers other than the lactone monomers which are copolymerized with the lactone monomers.

In the present invention, in the case that it is required to represent the total of the lactone resins and the other biodegradable resin, although it is called the "lactone-contained resin", "the lactone-contained resin" is also a kind of the "lactone-contained resin composition" as described hereinabove.

In the present invention, "a lactone-contained resin composition containing a lactone resin irradiated by ionizing radiation, and at least any one of the other biodegradable resin and an additive for resins" is the above-described composition containing a lactone resin irradiated alone or together with the other component by the ionizing radiation.

[Lactone Resin]

The above-described lactone resin employed in the present invention includes a homopolymer of a lactone monomer described hereinafter, a lactone copolymer of at least two kinds of lactone monomers, a copolymer of the lactone monomers with the monomers other than the lactone monomers, and a mixture thereof, etc.

As the lactone monomers, there are enumerated ε-caprolactone; a variety of methylated lactones such as 4-methylcaprolactone, 3,5,5-trimethylcaprolactone, and 3,3,5-trimethylcaprolactone; β-propiolactone; γ-butyrolactone; δ-valerolactone; and enantolactone, etc.

As the monomers other than the lactone monomers to be copolymerized with the lactone monomers, there are enumerated an aliphatic hydroxycarboxylic acid such as glycolic acid, lactic acid, hydroxypropionic acid, hydroxybutyric acid and cyclic dimers thereof, aliphatic diols and aliphatic dicarboxylic acids exemplified by aliphatic polyesters described hereinafter.

As the lactone resin, there is preferred a resin which is not softened at ordinary temperatures, and polycaprolactone is preferred from the viewpoint, which has a high molecular weight and a melting point of 60°C or so, and which is liable to obtain stable properties.

Hereinafter, the lactone resin in the present invention is illustrated using a polycaprolactone which is a typical example thereof.

As the polycaprolactone which is a raw material for irradiating ionizing radiation, there can be employed ones having a number average molecular weight of 10,000-1,000,000, preferably 30,000-500,000, and more preferably 50,000-200,000 in view of effective crosslinking.

For a degradable bag for garbages and a sheet-like molded article for agriculture, there are preferred ones having 40,000-150,000 in view of practical crosslinking.

For tapes and bands, there are preferred ones having not less than 100,000.

The polycaprolactone having the above-described molecular weight has a relative viscosity of 1.15-2.80 regulated by JIS K6726, particularly, preferably 1.50-2.80.

As a commercially supplied polycaprolactone, there are enumerated a variety of Placcels (a trade name of Daicel Chemical, Ltd.), such as H7, H4 and H1 etc. Placcel H7 (which is referred to as H7, too) has a number average molecular weight of 70,000-100,000 and a relation viscosity of 2.35-3.20.

The lactone resin including the polycaprolactone is insoluble in water. Accordingly, in the case that it is employed as a sheet for agriculture, it is occasionally employed by impregnating into papers or fibrous materials. Therefore, in order to obtain a biodegradable sheet for agriculture, the lactone resin is employed alone or together with the other biodegradable resin, and the other biodegradable resin is also preferably insoluble in water and capable of being impregnated into papers, etc. However, there are not preferred a sheet-like article and a molded article composed of a resin composition in which the lactone resin is kneaded with a large amount of polyolefin because the nondegradable component is remained even after biodegradation.

[Other biodegradable resin]

As the above-described other biodegradable resin, synthetic and/or natural polymers are employed.

As the synthetic polymers, there are enumerated an aliphatic polyester, a polyamide, a polyamide ester, a biodegradable cellulose ester, a polypeptide, a polyvinyl alcohol, or a mixture thereof.

The above-described synthetic aliphatic polyester resin is a polyester resin other than the lactone resin, and it is an aliphatic polyester resin which is obtained by a condensation polymerization or a ring-opening polymerization.

Also, since there can be likewise employed an aliphatic polyester resin produced by microorganisms in the present invention, it is merely called an aliphatic polyester resin together with the synthetic aliphatic polyester resin.

(Aliphatic polyester)

As the aliphatic polyester resin, there can be enumerated an synthetic polylactic acid [ECOPLA (manufactured by Kurgil, Ltd.), Lacty (manufactured by Shimadzu Seisakusyo, Ltd), etc.], polyvinyl alcohol-based resins, biodegradable polyester resins such as a copolymer based resin of 3-hydroxybutyrate with 3-hydroxyvalirate, a copolymer of lactic acid with a hydroxycarboxylic acid described in JP-A-07177826 Official Gazette, a polyethylene succinate and a polybutylene succinate and, etc. (as such the resins, there can be exemplified a polyester resin synthesized from a low molecular weight aliphatic dicarboxylic acid and a low molecular weight aliphatic diol typified by Bionolle by Showa Kobunshi, Co. Ltd.), a polyethylene succinate and a polybutylene succinate and, etc. (as such the resin, there can be exemplified a polyester resin synthesized from a low molecular weight aliphatic dicarboxylic acid and a low molecular weight aliphatic diol typified by Bionolle by Showa Kobunshi,co.Ltd.), an aliphatic polyester such as a terpolymer described in JP-A-09235360 and JP-A-09233956 Official Gazettes, a copolymer of lactic acid with a hydroxycarboxylic acid described in JP-A-07177826 Official Gazette, and a natural linear chain polyester-based resin, etc.

As the polyester of a low molecular weight aliphatic dicarboxylic acid with a low molecular weight aliphatic diol, there is preferred a polyester of a linear chain or branched aliphatic diol having a carbon number of 1-10 with a linear chain or branched aliphatic dicarboxylic acid having a carbon number of 1-10.

There is employed one having content of the diol of 20-70% by weight and content of the aliphatic dicarboxylic acid of 80-20% by weight.

As the aliphatic polyester resin, there is employed one having a number average molecular weight of 20,000-1,000,000, and preferably exceeding 40,000 based on standard polystyrenes by GPC.

In the case of the preparation of fibers, a number average molecular weight in the aliphatic polyester resin ranges in not less than 30,000, and more preferably 70,000-200,000 in order to ensure a tensile strength of fibers. In the case that a number average molecular weight is less than the above-described range, there occasionally tend to lower mechanical properties such as tensile strength, and in the case of excessively exceeding the above-described range, melt viscosity abnormally increases in a spinning process, and moldability occasionally tends to lower.

Of those, a melting point is usually 90-110°C in one often employed.

The aliphatic polyester resin may be highly-polymerized by urethane bonds by addition of an isocyanate such as hexamethylene diisocyanate so as to react with a low molecular weight aliphatic polyester.

As the isocyanates to be employed hereinabove, there are enumerated diisocyanates and polyisocyanates having 3 or more functionalities, and a mixture thereof.

As the diisocyanates, there are enumerated hexamethylene diisocyanate, isophorone diisocyanate, 2,4-and/or 2,6-tollylene diisocyanate, diphenylmethane diisocyanate, hydrogenated diphenylmethane diisocyanate, xylilene diisocyanate, hydrogenated xylilene diisocyanate, 1,5-naphthylene diisocyanate, and a mixture thereof. As the polyisocyanates having 3 or more functionalities, there are enumerated triphenylmethane triisocyanate, hydrogenated triphenylmethane triisocyanate, ridine diisocyanate methylester {$OCN-(CH_2)_4-CH(-NCO)(-COOCH_3)$}, trimethylhexamethylene diisocyanate, adducts of the above-described diisocyanates with a polyvalent alcohol, a trimer of the above-described diisocyanates, and a mixture thereof, etc.

Particularly, there are appropriate aliphatic or cycloaliphatic isocyanates such as hexamethylene diisocyanate, hydrogenated diphenylmethane diisocyanate, hydrogenated xylilene diisocyanate, isophorone diisocyanate, and hydrogenated triphenylmethane triisocyanate in view of preventing discoloration of the polyester resins.

In the linear chain aliphatic polyesters before modification, a number average molecular weight ranges in 1,000-50,000, preferably not less than 5,000, and more preferably not less than 10,000.

In the aliphatic polyesters obtained by modification, a number average molecular weight ranges in 10,000-500,000, preferably not less than 50,000, and more preferably not less than 100,000.

Use amount of the isocyanates is decided such that MT (melt tension) and MI (melt index) are adjusted in a fixed range to the linear chain aliphatic polyesters.

As described hereinabove, there are obtained an aliphatic polyester resin having the MT of not less than 2 g and the MI of 1-9 g/10 minutes.

Hereinafter, a mixing ratio of the lactone resin with respect to the aliphatic polyester resin will be illustrated by exemplifying the preparation of a film, particularly, a film by an inflation method.

First of all, as the mixing ratio of the lactone resin with respect to the aliphatic polyester resin, the former is preferably 70-5% by weight, and the latter is preferably 30-95% by weight (total of the both is 100% by weight) and, in the case, maximum of the former is particularly preferably not more than 60% by weight, 60-90% by weight of the latter is a preferred range based on 40-10% by weight of the former. In the case that the lactone resin exceeds 70% by weight, mechanical physical properties at high temperatures show a tendency of lowering in a molded article such as a film and, in the case of less than 5% by weight, degradability by biochemical decomposition possibly tends to lower. Also in the case of being out of a range of 40-10% by weight, the tendency is likewise shown.

On the other hand, in the case that mixing amount of the aliphatic polyester resin exceeds 95% by weight, biodegradability is apt to lower and, contrarily, in less than 30% by weight, for example, in the case that it is molded into a film, heat resistance is possibly lowered. Also in the case of being out of a range of 60-90% by weight, the tendency is likewise shown.

In the case of employing polycaprolactone, and a polyester from a diol/an aliphatic carboxylic acid, it is mixed at the weight ratio ranging in 80/20-20/80.

In the case of employing a polycaprolactone and a polylactic acid, it is mixed at the weight ratio ranging in 99/1-1/99, and preferably 90/10-60/40.

In the case of employing three kinds of biodegradable polymers such as polylactic acid, a polyester from a diol/an aliphatic carboxylic acid, and polycaprolactone, those are mixed at the mixing ratio of the polyester from a diol/an aliphatic carboxylic acid to the polycaprolactone of 30/70-70/30 and the mixing ratio of the polylactic acid to the polycaprolactone of 20/80-80/20.

In the case that a shrink film is molded according to the above-mentioned formulation, a shrinking curve becomes smooth and, in the case that a shrink film is shrunk after covering around a vessel, generation of wrinkles can be prevented in shrinkage.

Hereinafter, there is illustrated a formulation example in the case of preparing biodegradable fibrous materials.

In the case of preparing biodegradable fibrous materials, there is a preferred one in which 1-200 parts by weight of the polycaprolactone is mixed with 100 parts by weight of the aliphatic polyesters, and there is particularly preferred a composition in which 4-55 parts by weight of the above-described polycaprolactone is mixed with 100 parts by weight of the aliphatic polyesters.

(Biodegradable cellulose ester, polypeptide, and polyamide ester)

As the biodegradable cellulose esters, there are exemplified organic acid esters such as a cellulose acetate, a cellulose butylate, and a cellulose propionate; inorganic acid esters such as a cellulose nitrate, a cellulose sulphate, and a cellulose phosphate; mixed esters such as a cellulose acetate-propionate, a cellulose acetate-butylate, a cellulose acetate-phthalate, and a cellulose nitrate-acetate. The cellulose esters may be employed solely or in combination of two or more kinds. Of the cellulose esters, the organic acid esters and, particularly, the cellulose acetate is preferred.

As the polypeptide, there are exemplified polyamino acids such as a polyglutamic acid and a polymethylglutamic acid, and polyamide esters, etc.

As the polyamide ester, there are exemplified resins, etc. prepared by ε-caprolactone and ε-caprolactam.

In the above-described cellulose ester, polypeptide, and polyamide ester, the number average molecular weight is not less than 20,000 and not more than 200,000, and preferably not less than 40,000 which is based on standard polystyrenes by GPC.

As a mixing ratio of the above-described cellulose ester, polypeptide, and polyamide ester, it is nearly the same as the mixing ratio of the aliphatic polyesters with the lactone resin.

As natural polymers, there are enumerated starches, celluloses, papers, pulps, cottons, hemps, wools, silks, leathers, carrageenan, chitin-chitosan components, natural linear chain polyester-based resins, and a mixture thereof. The natural linear chain polyester-based resins are illustrated by including the aliphatic polyesters as described hereinabove.

(Starches)

As the starches to be employed in the present invention, there are enumerated raw starches, processed starches, and a mixture thereof. As the raw starches, there are enumerated corn starches, potato starches, sweet potato starches, wheat starches, cassava starches, sago starches, tapioca starches, rice starches, bean starches, arrowroot starches, bracken starches, lotus rhizome starches, and water chestnut starches, etc. As the processed starches, there are enumerated physically-modified starches (α-starch, classified amylose, and a moisture- and thermally-treated starch); enzyme-modified starches (hydrolyzed dextrin, enzyme-decomposed dextrin, and amylose, etc.); chemically-decomposed modified starches (acid-treated starch, starches oxidized by hydrochloric acid, and dialdehyde starch); derivatives of the chemically-modified starches (esterified starches, etherified starches, cationized starches, and crosslinked starches, etc.), etc.

Of the above descriptions, as the esterified starches, there are enumerated acetic acid-esterified starches, succinic acid-esterified starches, nitric acid-esterified starches, phosphoric acid-esterified starches, urea-phosphoric acid-esterified starches, xanthate-modified starches, and acetoacetic acid-esterified starches, etc.; as the etherified starches, there are enumerated allyl-etherified starches, methyl-etherified starches, carboxymethyl -etherified starches, hydroxyethyl -etherified starches, and hydroxypropyl-etherified starches, etc.; as the cationized starches, there are enumerated reaction products of starches with 2-diethylaminoethyl chloride, reaction products of starches with 2,3-epoxypropyl trimethyl ammonium chloride, etc.; as the crosslinked starches, there are enumerated starches crosslinked by formaldehyde, starches crosslinked by epichlorohydrin, starches crosslinked by phosphoric acid, and starches crosslinked by acrolein, etc.

Further, as a modifier for starches, there can be also added ureas, hydroxides of alkaline earth or alkaline metals, and a mixture thereof.

Addition amount of the above-mentioned starches ranges in, although it is not particularly limited, 10-80 parts by weight, particularly, preferably 25-50 parts by weight based on 100 parts by weight of the lactone-contained resins.

[Additives for resins]

As the additives for resins, there are enumerated plasticizers, thermal stabilizers, lubricants (including a liquid lubricant), anti-blocking agents (finely-powdered silica, etc.), nucleating agents, agents for photo-degradation, accelerators for biodegradation, automatic oxidants, anti-oxidants, ultraviolet ray stabilizers, antistatic agents, flame retardants, flowing drop agents, water resistible agents, anti-bacterial agents, deodorants, herbicides, fillers such as calcium carbonate, extenders, coloring agents, crosslinking agents, and a mixture thereof.

Those are formulated in the total ratio of 0.1-100 parts by weight based on 100 parts by weight of the lactone-contained resins.

Particularly, the addition of the photo-degradable accelerators and automatic oxidants, etc. is a preferred method in view of giving brittleness at a desired period of elapsed time to a film when it functions as a mulch film, and it becomes easy to plow it into soil.

In the molded articles and films, etc. of the present invention, there can be mixed an appropriate amount of other resins, for example, resins such as an ethylene copolymer (an ethylene/vinyl acetate copolymer, etc.), other polyolefines, hydrogenated styrene-butadiene rubbers, polyurethanes, and polyamides within a scope of not interfering biodegradability and degradability.

As the above-described ethylene/vinyl acetate copolymer, there can be enumerated ones having an ethylene content of 10-70% by weight and a vinyl acetate content of 30-90% by weight and, preferably, the ethylene content of 20-40% by weight and the vinyl acetate content of 60-80% by weight. In the case that the vinyl acetate content is less than 30% by weight, extension in fracture becomes small and, in the case that the vinyl acetate content exceeds 90% by weight, impact strength (Izod impact value) becomes small. A weight average molecular weight is preferably 50,000-500,000 or so. In the case of less than 50,000, there lower strength in fracture and yield strength, and extension in fracture also becomes small. Further, in the case of exceeding 500,000, strength in fracture lowers.

Addition amount of EVA is 5-70 parts by weight, preferably 10-30 parts by weight based on 100 parts by weight of the lactone resins or total of the lactone resins and the other biodegradable resins. In the case that the EVA is less than 5 pars by weight, extension in fracture and impact strength are not sufficiently obtained and, in the case that the EVA exceeds 70 pars by weight, transparency lowers in the composition and, strength also largely lowers. As commercially supplied EVA, there are enumerated Evaslen 250, 310P, and 450P (manufactured by Dainippon Ink, Ltd.). in the case that the present invention is applied to a shrink film and a degradable tape, shrinkage ratio at low temperatures is preferably improved (excellent in shrinkage at low temperature) by the addition of the EVA.

(Plasticizer)

As the plasticizer, there are exemplified an ester of an aliphatic dibasic acid, a phthalate, a polyvalent hydroxy carboxylate, a polyester-based plasticizer, an ester of a fatty acid, an epoxide-based plasticizer, and a mixture thereof.

Specifically, there are enumerated the phthalate such as di-2-ethylhexyl phthalate (DOP), dibutylphthalate (DBP), and diisodecylphthalate (DIDP), an adipate such as di-2-ethylhexyl adipate (DOA) and diisodecyladipate (DIDA), an azelaic ester such as azelaic acid di-2-ethylhexyl (DOZ), the polyvalent hydroxy carboxylate such as acetyl citric acid tri-2-ethylhexyl and acetyl citric acid tributyl, the polyester-based plasticizer such as polypropyleneglycol adipate, and the polyester-based plasticizer such as polycaprolactone having a low molecular weight, and those are employed solely or in combination of two or more kinds.

For the shrink film, azelaic acid di-2-ethylhexyl (DOZ) is preferably enumerated.

Addition amount of the plasticizers, although it depends upon the concentration, ranges in preferably 3-30 parts by weight based on 100 parts by weight of the lactone-contained resins.

In a film, it preferably ranges in 5-15 parts by weight.

In the case of less than 3 parts by weight, extension in fracture and impact strength become lower and, in the case of exceeding 30 parts by weight, there is shown a tendency that there occasionally become lower extension in fracture and impact strength.

EP 0 984 039 A1

(Thermal stabilizers)

As the thermal stabilizers to be employed in the present invention, there is a salt of an aliphatic carboxylic acid. As the aliphatic carboxylic acid, an aliphatic hydroxycarboxylic acid is particularly preferred. As the aliphatic hydroxycarboxylic acid, lactic acid and hydroxy butyric acid, etc. are preferred which naturally exist.

As the salt, there are enumerated salts such as sodium, calcium, aluminum, barium, magnesium, manganese, iron, zinc, lead, silver, copper, etc. Those can be employed solely or in combination of two or more kinds.

Addition amount ranges in 0.5-10 parts by weight based on 100 parts by weight of the lactone-contained resins. When the thermal stabilizer is employed within the above-described range, impact strength (Izod impact value, Dart impact value) is improved and, there is an effect that there becomes smaller a deviation in extension in fracture, strength in fracture, and impact strength.

(Lubricants)

As the lubricants to be employed in the present invention, there can be employed ones which can be usually employed as an internal lubricant or an outer lubricant. For example, there are enumerated fatty acid esters, hydrocarbon resins, paraffins, higher fatty acids, oxyfatty acids, fatty acid amides, alkylenebis fatty acid amides, aliphatic ketones, fatty acid esters of a lower alcohol, fatty acid esters of a polyvalent alcohol, fatty acid esters of a polyglycol, aliphatic alcohols, polyvalent alcohols, polyglycols, polyglyceroles, metal soaps, modified silicones, and a mixture thereof. Preferably, fatty acid esters hydrocarbon resins, etc. are enumerated.

More specifically, as the amide of a fatty acid, there are enumerated monoamides of a saturated fatty acid such as an amide of lauric acid, an amide of palmitic acid, an amide of a palmitic acid having a high purity, an amide of stearic acid, a refined amide of stearic acid, an amide of a stearic acid having a high purity, an amide of behenic acid, an amide of behenic acid having a high purity, an amide of hydroxystearic acid, and an amide of oleic acid; bisamides of a saturated fatty acid such as bisamide of methylenebis stearic acid, bisamide of ethylenebis capric acid, bisamide of ethylenebis lauric acid, bisamide of ethylenebis stearic acid, bisamide of ethylenebis isostearic acid, bisamide of ethylenebis hydroxystearic acid, bisamide of ethylenebis behenic acid, bisamide of hexamethylenebis stearic acid, bisamide of hexamethylenebis behenic acid, bisamide of hexamethylenebis hydroxystearic acid, bisamide of N,N'-distearyladipic acid, and bisamide of N,N'-distearylsebasic acid; monoamides of an unsaturated fatty acid such as monoamide of oleic acid, monoamide of a refined oleic acid, and monoamide of licinoleic acid; bisamides of an unsaturated fatty acid such as bisamide of ethylenebis oleic acid, bisamide of hexamethylenebis oleic acid, bisamide of N,N'-dioleiladipic acid, bisamide of N,N'-dioleilsebasic acid; substituted amides such as amide of N-stearylstearic acid, amide of N-oleiloleic acid, amide of N-stearyloleic acid, amide of N-oleilstearic acid, amide of N-stearyleruic acid, and amide of N-oleilpalmitic acid; amide of methylol stearic acid; methylol amides such as amide of methylol behenic acid; aromatic bisamides such as bisamide of N,N-distearyl isophthalic acid and bisamide of methaxylilene bistearylic acid.

These are a solid lubricant at ordinary temperatures.

In the case of selecting the lubricant, it is required that there is selected a lubricant having a melting point lower than those depending upon a melting point of the lactone resin or a variety of aliphatic polyester resins. For example, there is selected an amide of a fatty acid having a melting point of not more than 160°C in consideration of a melting point of the synthetic aliphatic polyester resins.

Formulation amount of the lubricant, in the case of a film, ranges in 0.05-5 parts by weight, and preferably 0.1-3 parts by weight based on 100 parts by weight of the lactone-contained resins. Particularly, the formulation amount in the amides of a fatty acid preferably ranges in 0.2-5 parts by weight, and more preferably 0.3-1.5 parts by weight based on 100 parts by weight of the lactone-contained resins.

In the case that the amount of the lubricant is less than the above-described range, an effect for preventing blocking becomes slightly lower through an internal portion of a tubular film, or between a film and nip rolls or guide rolls and, on the other hand, in the case of exceeding the above-described range, a slipping property of the film becomes excessively high, resulting in that there becomes shown a tendency that a decline of printing applicability and an adhesive property, etc., in addition to a problem of a telescopic phenomenon in roll winding.

There are preferred amide of ethylenebis stearic acid, amide of stearic acid, amide of oleic acid, and amide of erucic acid which are high in safeness, and registered in FDA (USA Food and Drug Administration) from a viewpoint of preventing environmental pollution.

Further, as a commercially supplied product for a shrink film, there can be employed Rikestar-EW-100 (manufactured by Riken vitamin, Co.) and Hoechst Wax OP (manufactured by Hoechst, AG), etc.

In the liquid-state lubricants as a wetting agent, there is employed a lubricant having a melting point of not more than 70°C, and preferably, a liquid-state one at ordinary temperatures. For example, there are enumerated liquid paraffins, paraffin waxes, stearyl alcohol, stearic acid, and stearates such as butyl stearate, stearic acid monoglyceride, pentaerythritol tetrastearate, and stearyl stearate, etc.

15

It is to be noted that the liquid paraffins, which are most preferred as the liquid-state lubricant, is very safe because an acute oral toxicity (rat) LD50 is 5 g/kg, and it is approved as an additive for foods in Food Hygiene Law, it is a very favorable material from a viewpoint of preventing environmental pollution in the case of having been dumped after the use of a film.

In the case that the solid-state lubricant is employed, although it can be practically employed when a resin composition containing the resin has a higher melting point than a melting point in the solid lubricants, if the liquid-state lubricant is selected, melting is not required, and the liquid paraffin which is a liquid at room temperatures is a most preferred lubricant in view of the unnecessary of melting.

Purpose of employing the liquid-state lubricant depends upon that the polycaprolactone and the aliphatic polyester resin, which are polymer components, are usually supplied in the form of pellets or beads, and there is homogeneously mixed the finely-powdered silica having an exceedingly small bulk density described hereinafter and, further, the surface of the pellets or beads must be wetted by all means.

Addition amount of the liquid-state lubricant to be employed as described hereinabove is preferably 0.1-3 parts by weight, and more preferably 0.2-0.7 part by weight based on 100 parts by weight of the lactone-contained resin. In the case that the addition amount exceeds 3 parts by weight, the liquid-state lubricant adheres to an internal portion of a tumbler for mixing, resulting in that it becomes difficult to stably prepare and, in the case of less than 0.1 part by weight, there can not be sufficiently shown an effect as a wetting agent. The tendency is shown even in an outside of a preferable range of 0.2-0.7 part by weight.

(Accelerators for photo-degradation)

As the accelerators for photo-degradation, for example, there are exemplified benzoins, benzoin alkyl ethers; benzophenones and derivatives thereof such as 4,4'-bis (dimethylamino) benzophenone; acetophenones and derivatives thereof such as $\alpha,\alpha$-diethoxyacetophenone; quinones; thioxanthones; a photo-exiting agent such as phthalocyanine, an anatase-type titanium dioxide, an ethylene-carbon monoxide copolymer, and a sensitivity accelerator of an aromatic ketone with metallic salts, etc. The accelerator for photo-degradation may be employed solely or in combination of two or more kinds.

(Accelerators for biodegradation)

As the accelerator for biodegradation, there are exemplified, for example, an organic acid such as an oxo acid (for example, an oxo acid having a carbon number of 2-6 or so such as glycolic acid, lactic acid, citric acid, tartaric acid, and malic acid), a saturated dicarboxylic acid (for example, a lower saturated dicarboxylic acid having a carbon number of 2-6 or so such as oxalic acid, malonic acid, succinic acid, succinic anhydride, and glutaric acid); a lower alkyl ester of the organic acids with an alcohol having a carbon number of 1-4 or so. A preferred accelerator for biodegradation includes citric acid, tartaric acid, and malic acid which are an organic acid having a carbon number of 2-6 or so, and an activated carbon prepared from coconut shells, etc. The accelerators for biodegradation are employed solely or in combination of two or more kinds.

(Nucleating agents, fillers)

As the nucleating agent for crystalization(occasionally referred merely as a nucleating agent), there are enumerated boron nitride and titanium dioxide, etc.

As the fillers, there are enumerated finely-powdered silica, talc, calcium carbonate, magnesium carbonate, and finely-powdered particles prepared from natural materials such as papers, etc.

Purpose of employing the finely-powdered silica is to intend to prevent the above-described blocking of the inflation film, bags for garbages which are a secondarily formed article, and a mulch film for agriculture in relation to the present invention, and during film preparation.

The finely-powdered silica may be a silica prepared by a wet method, and even a silica prepared by hydrolysis at high temperatures in an oxygen-hydrogen flame of silicone tetrachloride.

In the finely-powdered particles, a particle diameter of not more than 50 nm is particularly preferred.

The fillers are mixed in a ratio of 0.1-50 parts by weight based on 100 parts by weight of the lactone-contained resins.

Particularly, the addition amount of the finely-powdered silica most preferably ranges in 0.1-3 parts by weight based on 100 parts by weight of the lactone-contained resin in view of showing the above-described effect.

A fixed irradiation by ionizing radiation may be also carry out before or after the addition thereof.

[Irradiation by ionizing radiation]

In the present invention, at least the lactone resin which constructs the lactone-contained resin is irradiated by a fixed ionizing radiation.

In the present invention, "a lactone resin which is a constructing component is irradiated alone or together with at least one of other constructing components using ionizing radiation" means that it is irradiated in a state of a lactone resin alone, in a state of a mixture of a lactone resin with other biodegradable resins, or in a state of formulation of the lactone-contained resin with at least one of additives for resins before molding, during molding, and after molding.

Also, the shape may be powder, a pellet state, a state of during molding, and a state of a product.

Accordingly, in the present invention, in addition to a resin composition obtained by mixing, for example, the synthetic aliphatic polyester resin and by further adding the amide of a fatty acid after in advance irradiating the lactone resin alone by fixed ionizing radiation, there are also included a resin composition which is obtained by mixing the lacton resin with a part of the synthetic aliphatic polyester resin or the amide of a fatty acid, by likewise irradiating the composition, after that, by adding the remaining part of the above components, and resin composition obtained by irradiating a mixture of the lactone resin, the synthetic aliphatic polyester resin and the amide of a fatty acid.

Further, there are included a mode in which, for example, the three components are mixed each other and irradiated by ionizing radiation, which includes a mode in which there is irradiated a composition (for example, strands, etc., for the preparation of pellets) in the preparation of pellets for molding, a mode in which a film during the preparation is irradiated, a mode in which a molded article is irradiated, and also a mode in which fibers are irradiated during spinning or after spinning.

(Radiation source)

As the source of the ionization radiation to be employed in an irradiation treatment by the ionization radiation according to the present invention, there can be employed $\alpha$-ray, $\beta$-ray, $\gamma$-ray, X-rays, an electron beam, and an ultraviolet ray, etc., and there are more preferred $\gamma$-ray from cobalt 60, the electron beam, and X-rays, and of those, irradiation of $\gamma$-ray and the electron beam by the use of an electron accelerator is most advantageous for introducing crosslinking structures into polymeric materials.

(Irradiation quantity and gel fraction of the lactone resin)

Irradiation quantity is decided by an indication of the gel fraction in the lactone resin which is an index of introduction of crosslinking structures into the polymeric materials. In the case of a low irradiation quantity, it is thought that there is generated a branched structure which is a precursor before crosslinking, and there is formed many branched structures which are insoluble in acetone, however, in the case that the branched structure is slight, it is soluble in acetone. In the present invention, processability can be improved, because the high melting point, low MI and/or high MT are caused by introduction of the branched structure in spite of no formation of gel. Thus, in the present invention the quantity of irradiation ranges in from introduction of the branched structure to the gel fraction of 100%, preferably 90%.

In the case that a lactone resin before molding is irradiated, the quantity of irradiation ranges in from introduction of the branched structure to the gel-fraction of 10%, preferrably 0.01-10% in consideration of moldability, for example, it ranges in preferably 0.1-1% or so in the pellets, it ranges in preferably 0.1-3% in the films, it ranges in preferably 0.05-1.0% in the shrink films, it ranges in preferably 0.1-1% in the sheet-state molded articles, and it rangs in preferably 0.05-1.0% in the thick-walled vessels.

In the case that a molded article is irradiated, the gel fraction in the lactone resin can be elevated to 90% or so. In the case that the gel fraction is elevated to not less than 10%, since the crosslinking is caused in a center of a noncrystalline region in the polymeric materials, a large amount of irradiation quantity is required such as, for example, 200 kGy in an irradiation treatment in the vicinity of room temperatures, and there is a tendency that a large amount of voids are generated in a treatment in the vicinity of a melting point, resulting in that strength is lowered.

Accordingly, in such the case, a lactone resin is irradiated in a state cooled to a temperature (in the polycaprolactone, 50-35°C) which does not attain to crystallization after once melting at a melting point (in the polycaprolactone, 60°C). By irradiating as described hereinabove at such the state, there can be obtained ones having an exceedingly high gel fraction by a low irradiation quantity.

By irradiating so that the branched structure is introduced or the gel fraction is adjusted to 0.01%-10%, and preferably 0.05%-5.0%, the branch structure and/or crosslinking is caused, and a melting point is elevated, resulting in that tensile strength, tear strength, and a mold-releasing property are improved, and adhering to rolls is lowered, and transparency is improved.

Also, there is included a mode irradiated by a low irradiation quantity at an initial stage, and then irradiated by a high irradiation quantity at a later stage, for example, irradiation is carried out so that the gel fraction is adjusted to 0.01-10%, preferably 0.05-5% in a pellets stage, and it is adjusted to 5-90%, preferably 10-90% during molding or after molding.

In the case of the thin-walled molded article, the gel fraction is preferably 0.1-1% or so.

As described hereinabove, since melt viscosity becomes higher than that of not irradiated ones, irradiation can be carried out again while maintaining the shape at higher temperatures, and crosslinking is caused at a higher probability, resulting in that heat resistance is improved.

Conditions in irradiation by ionizing radiation are not particularly limited. As described hereinabove, although there is specified a condition of "a state of not attaining to crystallization after melting" which is one of preferred conditions for treatments, the "state of not attaining to crystallization" described herein cannot be precisely specified. It means a state that a noncrystalline state is advantageous due to crosslinking in a noncrystalline portion, and it is thought that a kind of index is "a crystalline degree of not more than 5% or so measured by X-ray diffraction".

If the crystalline degree is lower than that in a state of room temperatures, a corresponding irradiation effect is obtained.

It is to be noted that even in the case that there are treated a variety of the above-described compositions composed of other components differently from a treatment of the lactone resin alone, an effect is sufficiently obtained by a consideration of a melting state of the lactone resin alone in the above-described lactone resin components.

Of course, a high gel fraction can be obtained by irradiation without melting.

The crosslinking reaction, which is an effect owing to a treatment by irradiation of ionizing radiation for the lactone resin in the present invention, can be caused even by a small amount of irradiation quantity of ionizing radiation, and it is effective even in 15kGy or so at ordinary temperatures, and the crosslinking degree becomes larger with an increase of irradiation quantity. Although the rate of irradiation quantity by ionizing radiation is not particularly limited, in the case that a higher crosslinking degree is required, since productivity is more improved in a higher rate of irradiation quantity, it is preferred. It is to be noted that an atmosphere is not limited in a treatment by irradiation of ionizing radiation, and the irradiation quantity can be more advantageously saved in a lower concentration of oxygen.

(Melt Index of the lactone resin)

A result of observation is as follows concerning an effect to the lactone resins in the present invention owing to the treatment by ionizing radiation. As a result that gel fraction and Melt Index (MI) for crosslinking degree were measured, there is observed a tendency that an effect starts at a period of attaining to the rate of irradiation quantity by ionizing radiation of 10kGy, and gel fraction abruptly increases at 100kGy, and MI further lowers at 60kGy and is stabilized at higher irradiation quantity.

As a result of biodegradability measured in an active sludge, there was obtained a result that a degradation ratio is elevated at a higher rate of irradiation quantity by ionizing radiation, biodegradation starts after immersion for 4-5 days, and there was obtained the degradation ratio of 50% after approximately 10 days.

In addition, there is observed an improvement in mechanical properties (tensile strength, tensile elongation, tear strength, and impact strength), and an anti-blocking property to nip rolls of a molded article, particularly, a film, etc.

A film stretched at not less than 60°C and then cooled is excellent in transparency and a thermally shrinking property.

It is to be noted that in the case of molding as a film, crosslinking degree is preferably adjusted so that MI of the lactone resin after irradiation becomes not more than 0.3 (that is, a low gel fraction), and in the case of irradiating after molding as in housings and flower pots, etc., crosslinking degree may be preferably adjusted so that MI becomes not more than 0.1 (that is, a high gel fraction).

Also, it can be molded into a shape of a final product after crosslinking to an extent that a melting point is slightly elevated before molding depending upon articles, whereby, MI is maintained at not less than 0.1, and then crosslinking can be carried out so that MI becomes not more than 0.1.

As fluidity in melting of the biodegradable resin composition composed of the lactone resin irradiated by the above-mentioned specified ionizing radiation, the aliphatic polyester resin, and the amide of a fatty acid, if the resin composition can be supplied into a step of film preparation, it is not particularly limited and, in the film preparation, MI is preferably 0.3-20, and 0.5-3 is particularly appropriate.

In the case of a film for degradable bag for garbages, if the resin composition can be supplied for molding a film, although fluidity in melting of the biodegradable resin composition composed of the lactone resin irradiated by the above-mentioned radiation rays, the aliphatic polyester resin, and the amide of a fatty acid according to the present invention is not particularly limited, MI is preferably 0.01-10, and 0.3-3 is particularly appropriate in molding of a film for degradable bag for garbages or a net-made bag for garbages.

In the case of a film for degradable bag for garbages, crosslinking degree in the lactone resin ranges in not more than 10%, preferably 0.1-1% as gel fraction. It is to be noted that in the case that irradiating by ionizing radiation is carried out during or after molding, since fluidity in melting is almost or quite not problematic differently from irradiating by ionizing radiation of raw materials for molding, a condition in which a high degree of crosslinking is carried out can be set in irradiating by ionizing radiation so far as not constituting other obstacles. Gel fraction of the lactone resin in the case usually ranges in 1-90%,

In the case of a mulch film for agriculture, if the resin composition can be supplied for molding a film, although fluidity in melting of the biodegradable resin composition composed of the lactone resin irradiated by ionizing radiation, the aliphatic polyester resin, and an amide of a fatty acid is not particularly limited, MI is preferably 0.5-20, and 1-5 is particularly appropriate in molding of a mulch film for agriculture.

In the sheet-like molded article, MI in the lactone resin after irradiation is 0.01-10, and preferably 0.3-3%.

Crosslinking degree in the lactone resin is not more than 10%, and preferably ranges in 0.1-1% as gel fraction described hereinafter.

(Glass transition point in the lactone resin)

Hereinafter, a glass transition point is preferably from -60 to 20°C in the resin which constructs a thin-walled molded article such as a blister pack of the present invention.

Also, in a sheet prepared from the above-mentioned resin, tensile elasticity (JIS K7127) is preferably 100-800 N/mm$^2$, or impact strength (JIS K7211) is preferably 10-50 kg-cm.

In the present invention, there can be obtained a variety of the thin-walled molded articles by molding the lactone-contained resin or the lactone-contained resin composition, and those can be molded through a preforming such as a sheet and a parison, etc. in a molding stage. As a molding method for those, there are enumerated vacuum molding, compressed-air molding, and vacuum-compressed-air molding, etc.

In the blister pack, etc. according to the present invention, thickness is not always identical in a vessel and a cover, and in usual, the vessel is preferably thicker.

Although the thickness in the thin-walled molded articles is appropriately selected depending upon uses thereof, as a thickness at which a crosslinking effect can be obtained by irradiation of ionizing radiation, it is preferably 10-1000 μm, and more preferably 20-500 μm in molded articles which are usually employed.

[Molded article, and Molding method]

In the present invention, there can be obtained a variety of the molded articles by molding the lactone-contained resin or the lactone-contained resin composition. In molding, there are included a primary molding such as preforming for pellets, plates, and parisons, a secondary forming such as sheets, films, tapes, thin-walled vessels, and thick-walled vessels (including monoaxially- or biaxially-stretched articles, and transparency and mechanical strength are improved by stretching), and fibers (including stretched fibers, and transparency and mechanical strength are improved by stretching), and further, the films are processed into bags, particularly, degradable bags for garbages, bags for draining water, shrink films (which may also be molded directly), and films having holes, etc.; laminated films are processed into mulch films for agriculture, etc.; the fibers are processed into threads or strings, ropes, fabrics, lines for fishing, and nets, etc.; tapes are processed into tapes for packing, nets, and bands, etc.; nets are processed into reinforcing materials for civil engineering, nets for planting, nets for a diaper, nets for menstrual materials, nets for medical supplies, etc.; the thin-walled vessels are processed into trays and blister packs, etc.; the thick-walled vessels are processed as vessels for foods, vessels for toiletry goods, vessels for transporting general goods, and vessels for cultivating plants, etc.; as daily necessaries, and industrial materials such as hoses and pipes, etc.; as materials for cushions by foaming, and materials for agriculture, etc.; and further, a body for pens, cards, materials for information media, outdoor materials, sports goods, and goods for leisure.

As molding methods, there can be employed extruding molding, injection molding, blow molding, calendar molding, compression molding, transfer molding, thermal molding, flow molding, and lamination molding, etc.

Further, in the case that bottles, etc. are molded by use of the parison, there can be employed vacuum molding, compressed-air molding, vacuum-compressed-air molding, etc.

(Pellets)

Hereinafter, pellets are illustrated.

As methods for preparing pellets comprising adding the above-mentioned various additives, a variety of conventional methods can be applied without any limitations.

As the simplest method, there is a method in which those are kneaded with raw materials which include biodegradable resin pellets according to the present invention, and those may be also added and spreaded over surface of strands during the preparation of pellets, or surface of pellets after cutting strands. A method for adding and spreading may be carried out at any one before or after irradiation by ionizing radiation.

There is illustrated an example of preparation methods for the strands and pellets from the above-mentioned formulated composition. First of all, the lactone resin, the aliphatic polyester, and the liquid-state lubricant are supplied in a tumbler, and mixed for 10-20 minutes, next the fatty acid amide is mixed, followed by adding minutely-crushed silica, starches, biodegradation accelerators, and followed by further mixing by agitating for 20-30 minutes. And after that, melt kneading is carried out at 140-210°C with a single screw or twin screw extruder, etc., and a resin composition containing a variety of additives is extruded as strands from the extruder, followed by cutting after irradiation by ionizing radiation to obtain pellets. Otherwise, pellets not attaining to crystallization after cutting are irradiated by ionizing radiation.

Thus-obtained pellet-like resin composition containing the additives can be molded by conventional various molding methods such as an inflation method and a T-die method, etc. owing to an increase in melt viscosity based on the crosslinked structures compared to conventional lactone resins or a composition thereof which are not irradiated by ionizing radiation.

As a method for adding, there is most preferred a method in which those are kneaded with a composition containing the lactone resin according to the present invention, a composition comprising the lactone resin and the aliphatic polyester, or a resin composition further containing the fatty acid amide while heating, whereby, secondarily-aggregated particles are loosened by an action of a relatively high shearing force, and an effect for preventing blocking between films themselves and film and each roll, and for preventing sticking.

As a method for obtaining a composition in which a variety of the above-mentioned additives are added to the above-mentioned biodegradable resin composition, there can be applied a variety of conventionally-employed methods without any limitations.

(Film, sheet)

Subsequently, the preparation of the films and sheets are illustrated hereinafter using an example of molding methods by an inflation method.

The lactone-contained resin composition which is a raw material is supplied into an extruder equipped with a circular die, and it is extruded from a slit of the circular die in a tubular state after melt kneading at approximately 180°C.

At that time, the extruder is preferably employed which has an extruding diameter ranging in approximately 40-65 mm, a ratio of length/diameter (L/D) ranging in 26-32, diameter of the circular die ranging in 50-150 mm, and a gap in the slit of the die ranging in 0.5-1.5 mm.

An extruded non solidified tubular inflation film is expanded until a fixed diameter with a blowing ratio (diameter of a tube/diameter of die) of not less than 2 by a pressure of a gas introduced from an inlet for blowing a gas which is inserted passing through the die, and then folded and pulled at a constant speed by nip rolls to obtain a cylindrical film, or lengthily cut open and wound as a film having a wide width.

A resin composition obtained through an irradiation stage by can be stably molded as a film regardless of temperatures of resins extruded from a circular die, and it is thought that stable molding is caused by crosslinked structures in the lactone resin.

A lactone-contained resin composition obtained through an irradiation stage rays can be stably molded as a film regardless of temperatures of resins extruded from a circular die at a surrounding temperature in the vicinity of room temperatures. However, in the case that outside temperature is relatively high such as in summer seasons, etc., there can be obtained a film without any blocking by introducing a chilled air of not more than 20°C from the inlet for blowing a gas.

Also in the case that a film during molding is irradiated by ionizing radiation, it is the same.

In the case that a film is plain such as in a film prepared by a T-die method, there is folded a film cut into an appropriate size, for example, a bag for garbages can be obtained by sealing side portions. In the case of a cylindrical film prepared by an inflation method, a bag for garbages can be obtained by sealing a bottom portion.

The above-mentioned method for sealing may be thermal adhesion and use of an adhesive, and the adhesive is also preferably biodegradable. Accordingly, selection thereof is required, whereby, it is troublesome. After all, there is preferred a thermal adhesion method which is the former method.

Thickness of films depends upon uses, and it is preferably 10-100 microns in a bag for garbages in a household, and it is preferably 50-200 microns in a large size bag for garbages packing contents having heavy weight.

Further, in the case of garbages from which water contained is preferably drained, a bag for garbages prepared from a water-drainable net is employed as a degradable bag for garbages. As a method for obtaining the bag for garbages prepared from the water-drainable net, a method is simplest in which holes are made in the surface of a usual degradable bag for garbages being watertight.

Position for making holes is not limited, if it is a position capable of showing functions for draining water, and it may be both sides, one side, an upper position, a lower position, and also whole surface.

Shape of holes and a relationship between positions of holes are not particularly limited, if strength and functions, etc. are shown within a scope of purposes as a bag for garbages capable of draining water. As the shape, for example, round holes are enumerated, and the relationship between positions may be regular, for example, the holes may be arranged at higher and lower positions, and may be slantingly arranged side by side, or may be also irregularly arranged.

Although diameter of the holes depends upon minimum size of waste matters to be filled up, in usual, it is preferably 0.1-0.5 mm, and more preferably 1-3 mm. The number of holes is preferably 10-2000 pieces, and more preferably 100-1500 pieces per 10 centimeter square.

In addition, there can be also employed non-woven fabrics prepared by split yarns obtained from a molded film, or woven fabrics and non-woven fabrics, etc. prepared using stretched tapes.

Thus-obtained bag for garbages prepared from a water-drainable net can be employed for draining water by laying around inside of a basket for filling up food garbages placed at a corner, etc. of a sink in a kitchen.

Since the degradable bag for garbages according to the present invention can be biodegradably treated together with food garbages, it is useful, and a method for biodegradably treating is actually as follows. The bag for garbages in which food garbages are filled up is thrown into a compost vessel as it is, or by draining water and it may be biodegradably decomposed together with food garbages.

Further, it may be biodegradably decomposed as a whole by dumping on the ground or in soil after gathering by a garbages-gathering car to make compost.

Thickness of the mulch film for agriculture according to the present invention is not particularly limited, and it is appropriately selected according to the kind of a cultivating method and objective plants of cultivation such as greenhouse-cultivation, a sheet in the greenhouse-cultivation, and tunnel-cultivation. In the mulch film to be usually employed, as thickness capable of obtaining a crosslinking effect by irradiation of ionizing radiation, it is preferably 10 $\mu$m-2 mm, more preferably 50-500 $\mu$m.

The film may be a multiple-layers structure according to purposes, and an acrylic resin may be coated in the one or both surfaces of the film. Whereby, there can be improved weatherability, pollution resistance, scratch resistance, a warmth-keeping property, a moisture-keeping property, an anti-clouding property, an anti-fogging property, and a drop-flowing property, etc.

As the acrylic resin, there are enumerated acrylic resins comprising methyl (meth)acrylate, an alkyl(meth)acrylate having a carbon number of 2-4, hydroxyethyl(meth)acrylate, and a mixture thereof, which are coated over the film in the form of an emulsion.

In the mulch film for agriculture, coloring agents and an agent for light selective-transmittability, etc may be added.

In the mulch film for agriculture according to the present invention, since strength can be lowered until a desired strength after a lapse of a fixed time of period, it can be plowed into soil, whereby, it can be then placed in a circumstance being biodegradable.

According to the present invention, powder-like or pellet-like resin composition containing the additives can be also applied to a variety of conventional various molding methods other than the inflation method owing to an increase in melt viscosity presumed as being based on the crosslinked structures compared to conventional lactone resins or compositions thereof which are not irradiated by ionizing radiation.

(Sheet-like molded article)

Hereinafter, the sheet-like molded article is illustrated.

As a method for obtaining the sheet-like molded article containing the lactone-contained resin irradiated by ionizing radiation as a construction component, a preferred method may be employed according to properties of the lactone resins to be employed, and it is not particularly limited, which includes the following some methods.

First of all, it is a method for obtaining a sheet-like molded article comprising impregnating a solution in which the above-described lactone resin irradiated by ionizing radiation is dissolved in an organic solvent or an emulsion into a sheet-like article composed of fibrous materials such as paper and pulp. Specifically, there are enumerated a method in which the sheet-like article composed of fibrous materials such as paper and pulp is immersed into a resin solution or an emulsion, and a method in which a resin solution or an emulsion is coated or sprayed over surface of the sheet-like article composed of fibrous materials such as paper and pulp and then evaporating the solvent or dispersing medium.

After likewise obtaining a sheet-like molded article using a lactone resin not irradiated by ionizing radiation, the sheet-like molded article may be also irradiated by ionizing radiation.

Concentration of the lactone resin in the above-described solution or the emulsion, although it depends upon solution viscosity based on the kind of the lactone resin to be employed, usually ranges in 3-30% by weight, and preferably 5-20% by weight.

In the case that the concentration of the lactone resin is less than 3% by weight in the solution or the emulsion, although impregnating rate is quick, there is a case that wet strength is not always sufficient in a sheet-like molded article prepared. On the contrary, in the case that the concentration of the lactone resin exceeds 30% by weight, there is occasionally a danger that the amount of the resin to be impregnated is apt to become excessive, and further, operations in impregnation become occasionally difficult because of an excessively high viscosity in the case of employing a solution.

It is to be noted that the kind of the organic solvents is freely selected according to the lactone resin, etc. to be employed.

As an other method, there is a method that there is prepared a sheet-like molded article in which a lactone resin is mixed during manufacturing paper. Specifically, it is a method for obtaining the sheet-like molded article by thermally melting the resin after manufacturing of paper by mixing powder or fibrous materials of the lactone resin irradiated by ionizing radiation with raw materials for paper.

After likewise manufacturing a sheet-like molded article using a lactone resin not irradiated by ionizing radiation, the sheet-like molded article may be also irradiated by ionizing radiation.

Further, as a method for obtaining a sheet-like molded article in which the lactone resin irradiated by ionizing radiation is laminated, there are enumerated a method in which there is heat-sealed a thin layer of a lactone resin and a sheet-like molded article composed of fibrous materials such as paper and pulp using heating press, a method in which powder of the lactone resin is scattered over surface of the sheet-like molded article composed of the fibrous materials such as paper and pulp, followed by heat sealing using a heating press.

Still further, as a method for obtaining the sheet-like molded article containing the above-mentioned lactone resin irradiated by ionizing radiation as a constructing component, there are enumerated a method for obtaining a molded article by heating a mixture composed of a powder-like and/or fibrous lactone resin and other powder-like and/or fibrous materials, whereby, melting resin components, and collectively molding into a sheet-like article, and a method for obtaining by coating the lactone resin irradiated by ionizing radiation onto a sheet-like article composed of the powder-like and/or fibrous materials using the above-mentioned method.

After likewise obtaining a sheet-like molded article using the lactone resin not irradiated by ionizing radiation, the sheet-like molded article may be irradiated by ionizing radiation.

The other powder-like and/or fibrous materials described herein may be a product usually employed for other uses, and in the case that it is employed in an agricultural field which particularly requires a low price, there are preferably employed, for example, sawdust, rice hulls, and crushed materials obtained from vegetables, and powder-like and/or fibrous wastes produced from a process in paper making industries.

Subsequently, as a method for obtaining a sheet for agriculture comprising an impregnated paper in which there is impregnated the above-mentioned lactone resin irradiated by ionizing radiation, in general, there are enumerated a method that paper is immersed in a solution or an emulsion of the lactone resin irradiated by ionizing radiation, a method in which the solution or the emulsion of the lactone resin irradiated by ionizing radiation is coated by rolls or sprayed for allowing to contain the solution of the lactone resin, and then a solvent or a dispersion medium is dried, a method in which resins are thermally melted after prepared by mixing the powder of the lactone resin treated as described hereinabove and the fibrous materials with raw materials for paper and forming a paper state, a method in which the resin powder is scattered over paper and then thermally melted, and a method in which thin layer of the resin is thermally adhered to paper using a heating press. In the case that the lactone resin is employed together with other biodegradable resins, an impregnating method is convenient. After likewise obtaining a sheet for agriculture using the lactone resin not irradiated by ionizing radiation, the sheet may be irradiated by ionizing radiation.

On the other hand, paper is not particularly limited which is employed in the sheet-like article, sheet-like molded article, and the sheet for agriculture according to the present invention. As thickness, there are preferred the thickness by which an impregnation process is not disturbed, and the thickness by which there are not disturbed a variety of workability, particularly, agricultural workability. For example, in view of the agricultural workability, there is preferred the same thickness or so as a polyolefine sheet employed at present time. Specifically, it is 1-0.01 mm, and preferably 0.3-0.05 mm. In the case of being excessively thick, the length per 1 roll becomes short, resulting in that covering over a long line of field by the 1 roll becomes impossible and, in being excessively thin, strength is insufficient, resulting in that the amount of resins for impregnation must be increased. Accordingly, the weight per a unit area is preferred in a range corresponding to the thickness of 0.05-1 mm.

It is to be noted that the paper may also contain soil produced from decayed-leaves, barks, etc., fertilizers, and pesticides, etc.

Coating amount, impregnation amount, a lamination amount of the lactone resin irradiated by ionizing radiation are 0.5-20 g/m$^2$, preferably 1-5 g/m$^2$ from viewpoint of strength, workability, and economy.

Strength of the paper largely depends upon raw materials of the paper and a preparation method even though it has same thickness, accordingly, strength of the paper to be required is preferably decided in combination with the strength of the above-mentioned lactone resin to be employed.

Regarding a molecular weight of the above-mentioned lactone resin to be employed, in the case of employing a resin having a high molecular weight, a desired strength is preferably obtained even by a small amount of resins.

For example, polycaprolactone is exemplified. In a resin having relative viscosity of less than 1.4 before irradiation by ionizing radiation, since a reinforcing effect is small, a resin having a higher relative viscosity is preferably employed. The above-mentioned paper thus-impregnated by the lactone resin becomes capable of employing as the sheet for agriculture owing to an elevated strength in a wet state.

(Thick-walled vessel)

Subsequently, the thick-walled vessel will be illustrated by exemplifying a bottle for beverages. In the bottle for beverages, stretch blow molding is applied in consideration of light weight and strength in the bottle.

A preform (parison) is composed of a flange portion and a cylindrical portion having a bottom. The flange portion functions as a screw portion or a support of the preform portion during extension molding.

It is to be noted that in the stretch blow molding method, there may be applied a cold-parison method and a hot-parison method. The cold-parison method is carried out by separating into two steps which include a preform molding step and an stretch blow molding step. The hot-parison method is carried out as a continuous step composed of the preform molding step and an stretch blow molding step.

(Degradable tape)

Hereinafter, the degradable tape will be illustrated.

The degradable tape of the present invention can be obtained by molding the lactone-contained resin or the lactone-contained resin composition into a tape-like article using a T-die type extruder, etc., or by slitting a film-like article into a tape-like article, by fabricating or knitting fibers or a fiber bundles to form a tape-like article, and by adhering fibers aligned through fusing, etc. The tape may be laminated with other biodegradable resin-made materials, and may be reinforced using fibers.

The degradable tape may be monoaxially or biaxially stretched, and there may be given an effect for non-slip by forming the unevenness at one or both surfaces, and further, there can be also formed an adhesive layer, a layer of a releasing agent and/or a heat sealing layer on one or both surfaces.

The tape of the present invention are employed for packings, bands, adhesive tapes, heat-sealing tapes, clearance tapes, separators, cover tapes, slit yarn tapes for wrapping, showing, and side tapes for a diaper, and menstrual goods, etc.

(Fibers, woven fabrics, non-woven fabrics, and materials for filtration)

Hereinafter, fibrous materials will be illustrated.

Fibers having a biodegradability according to the present invention can be prepared as a multifilament or monofilament, and a melt spinning method can be applied in either case.

Temperature in melt spinning, although it depends upon a number average molecular weight, etc. of a polyester resin composition to be employed, is preferably 140-220°C. In the case that the temperature in spinning is less than 140°C, melt-extruding is difficult and, in the case of exceeding 220°C, the polyester resin composition is remarkably decomposed, resulting in that it becomes difficult to obtain fibers having a high tenacity.

Regarding other spinning conditions, an example will be illustrated. In the case of the multifilaments, those are melt-spun from a spinneret having 10-100 holes, and cooled by air at room temperatures to 80°C, and then an oiling agent for usual synthetic fibers is coated, followed by supplying to one or more stages of a cold drawing or hot drawing step. Total drawing ratio depends upon properties to be required for desired multifilaments, and drawing ratio is not more than 1.2 times in a spinning speed of 10-1000 m/minute. In the case that the spinning speed is less than 10 m/minute, drawing becomes difficult because of crystallization and, in the case that the spinning speed is more than 1000 m/minute, fusion is occasionally caused between each filament. In the above-mentioned range of the spinning speed when drawing ratio is not less than 1.2 times, there can be obtained multifilaments having a high tensile strength.

On the other hand, in the case of the monofilament, the resin extruded from a spinneret is cooled in water of room temperatures to 80°C, necking drawing is carried out at an drawing ratio of 2-10 times. Drawing is carried out at one stage, and may be also carried out at two stages.

Total drawing ratio depends upon properties to be required for desired monofilament, and drawing ratio of not less than 4 times is preferred. In the drawing ratio of not less than 4, there can be obtained highly biodegradable fibers having a high tensile strength.

Using the biodegradable fibers alone obtained as described hereinabove, or using together with conventional natural fibers (wool which is an animal fiber, and hemp which is a vegetable fiber, etc. are typical examples), regenerated fibers (cellulose-based regenerated fibers are a typical examples), and/or semi-synthetic fibers (an acetate is a typical example in which acetic acid group is introduced into a cellulose-based fiber or a cellulose-based regenerated fiber), a variety of woven fabrics are obtained. As a method for weaving, there can be employed conventional method for weaving such as a plain weaving and twilled weaving. The woven fabrics is not particularly limited from a thin layer fabric such as a silk cloth having holes to a thick layer fabric such as a canvas in the thickness.

Particularly, in the biodegradable woven fabrics comprising the biodegradable fibers of the present invention, a shape-stability-processing is readily applied, and a stable state is maintained for a long time of period, and further, since a feeling in the woven fabric does not become worse when sweating, those are appropriate for a white shirt and an underwear, etc., and those are particularly appropriate for disposable wears, working clothes and waste clothes.

Fibers to be employed in the non-woven fabrics are the above-mentioned natural fibers, regenerated fibers, and/or semi-synthetic fibers, and a binder employed for binding and fixing between fibers is polycaprolactone having a number average molecular weight of not less than 10,000 and crosslinked structures formed by irradiation of ionizing radiation, particularly, it preferably ranges in 10,000-1,000,000. In the number average molecular weight of not less than 10,000, it contributes an elevation of a variety of mechanical strength and biodegradability in the non-woven fabrics.

It is to be noted that in the case that a biodegradable cellulose acetate having a substituted degree of not more than 2.1 is employed together as fibers constructing the non-woven fabrics, since a function of biodegradability is further improved, it is effective. Although the reason is not distinct, it is thought that the addition of the cellulose acetate having the low substitution degree has an action of accelerating a biodegradable function of the other fibers. It depends upon a consideration that when the substitution degree nears 3 in a cellulose acetate, it becomes chemically stable, and solvent resistance and chemical stability lower in the vicinity of the substitution degree of 2, and a cellulose acetate having the substitution degree of not more than 2.1 is excellent in biodegradability.

The polycaprolactone which is a binder has a function of improvement in tensile strength and tear strength of the non-woven fabrics, and itself has a biodegradability, and further, it is characterized by showing characteristics that the above-mentioned strength and a biodegradability are further improved by formation of crosslinking structures through irradiation by ionizing radiation.

Irradiation by ionizing radiation in the polycaprolactone may be also carried out in the state of powder and pellets, and when irradiation is carried out after having contained it as a binder between fibers of the non-woven fabrics at a period of being excellent in flowability before formation of crosslinked structures, a step for containing is simple and effective. However, since crosslinking in the present invention does not form an insoluble and nonfused state, the present invention does not exclude a process for the preparation in which a binder is contained after irradiation by ionizing radiation.

As a method for allowing to contain the polycaprolactone as a binder between fibers in the non-woven fabrics, it is not particularly limited, and a method is simple and effective for the formation of binder, in which a polycaprolactone is impregnated into the non-woven fabrics as a acetone solution, etc, and then the solvent is removed.

Subsequently, materials for filtration are illustrated.

Construction of the materials for filtration, in consideration of intrinsic functions, if those have paths through which there are passed fluids such as gases and liquids in which dispersions to be filtered and separated are dispersed and floated, is not of course limited. Those may be a mass of fibers, fiber bundles composed of fibers, woven fabrics, non-woven fabrics, and membranes having holes of desired diameter. These can be formed into a variety of shapes according to shapes of cross section of the paths for liquids, and those are more convenient and more effective as the materials for filtration than a packing of inorganic powder or particles.

Fibrous materials and the membranes to be employed possess a high mechanical strength which is resistible to a high liquid pressure and a high biodegradability which have become recently required.

As the materials which can respond to the requirements, there are preferably employed polycaprolactone in which crosslinked structures are formed by irradiation of ionizing radiation in the molecules, metallic fibers (for example, iron fibers, aluminum fibers, and stainless steel fibers, etc.) which change to harmless compounds by burying underground and then being eroded under natural circumstances to lose the original shape, and/or a composite in which the surface of metallic fibers is coated with the polycaprolactone irradiated by ionizing radiation.

Irradiation to the polycaprolactone by ionizing radiation corresponds to the irradiation illustrated in detail in the illustration for the above-mentioned fibers and non-woven fabrics, and an irradiation stage is not particularly limited. In the case of fibers, there is most effective a method irradiated at a stage of a starting composition because of capability of most uniformly irradiating, and in the case of coating on metallic fibers, irradiation after coating is easy in operations which is a preferred method.

It is to be noted that for the biodegradable fibers as fibrous materials in relation to the materials for filtration, there can be likewise applied the method for the preparation of multifilaments and monofilament illustrated regarding the above-mentioned fibrous materials.

That is, the fibrous materials according to the present invention are completely decomposed by biodegradation by only leaving those in soil containing microorganisms and water even in the case of dumping without recollecting after uses as materials for fishery, materials for agriculture, materials for civil engineering, materials for industries, materials for hygiene, and materials for packing waste materials. Accordingly, it is confirmed that there is not required a particular treatment for dumping such as burning, whereby, simplification for treatment can be attained and, in addition, those can contribute to environmental protection.

Also, since a strength becomes strong in the resin irradiated by ionizing radiation, size of fibers can be decreased.

(Net)

Hereinafter, a biodegradable net is illustrated.

As described hereinabove, a variety of molded articles can be obtained by molding the lactone-contained resin or the lactone-contained resin composition. Molding includes a primary molding for a preform such as pellets, plates, and parison, and a secondary molding for films (including a sheet), tapes, fibers, and non-woven fabrics, etc.

In a sheet-like net having holes, holes may be formed after molding, using the sheet obtained as described hereinabove, and a sheet having holes be also formed into a net. The net may be formed by using fibers, strings therefrom, fiber bundles, twisted fibers, and ropes, by using tapes as warps and wefts, and using non-woven fabrics having holes by allowing to form holes in the non-woven fabrics, and by loosening the non-woven fabrics. Nets can be prepared by weaving or knitting fibers or tapes.

Also a biodegradable net composed of a foamed material can be also formed using a foam of the above-mentioned biodegradable resins.

In the net, size of apertures is decided depending upon the uses, it widely ranges from 0.001 mm to 10 cm. Also, the net may be a single layer or multiple layer, and the net may be laminated with non-woven fabrics, etc.

Such the biodegradable net can be employed as it is or by further forming, for agriculture, fishery, civil engineering, gardening, cushions for fruits, or goods for daily life, medical goods, particularly, diapers, menstrual goods, and bandages.

As molding methods, there can be employed extrusion molding, injection molding, blow molding, calendar molding, compression molding, transfer molding, thermal molding, flow molding, lamination molding, foaming molding, foam-loosening molding, and spinning, etc.

In a meshsheet for civil engineering which aims at reinforcing the foundation, size of fibers or a fiber bundle is preferably 1,000-200,000 denier. Further, mesh of the net is 0.1-50 mm. There can be obtained a net having a tensile property of not less than 1 t/m by using such the fibers, etc. The meshsheet for civil engineering may be set such as covering the foundation such as face of slope, and it may be also employed by holding soil and sand in a bag made by a net.

In a net for cultivating vegetables (or for planting), size of the fibers or a fiber bundle is preferably 100-10,000 denier.

Further, mesh in the net is 0.1-100 mm. The net can be employed by holding fertilizers, growth accelerators, and agricultural chemicals, etc. together with cultivated soil, soil and sand, seeds, bulbs, and seedlings, etc., and it can be also set over the foundation for field or for tree planting.

As the net for cultivating vegetables, a sheet having apertures can be also employed.

As the net for a medical use, there are enumerated gauze, bandages, and masks, etc.

In the net to be employed for a diaper or menstrual goods, etc., size of the fibers and a fiber bundle is preferably 10-1,000 denier. Also, mesh for the net is 0.01-10 mm. The net may be prepared by non-woven fabrics, or the foam-loosend fiber net can be also employed as a net.

The net for gardening is employed by covering in order to control sunshine when cultivating flowers, tea leaves, fruits and vegetables, and in order to prevent a damage by wild birds.

The net for fruits, which is a net in which short fibers are fusedly-adhered (it may be integrally-molded) by vertically and lengthily arranging, is a net for employing in order to show oranges, etc. at a store front, or a net for employing as a cushion when packing apples, etc., in which fams are fusedly-adhered (it may be integrally-molded) by vertically and lengthily arranged.

The net for fishery is a drawing net, a trawling net, a gilling net, and a spreading net, and further, an armed net such as scooping net, etc.

(Foam)

Hereinafter, a biodegradable foam is illustrated.

In the lactone-contained resin or the additives-contained composition obtained through an irradiation step by ionizing radiation according to the present invention, a foaming agent is added to foam, and a method for foaming which is conventionally publicly-known can be applied.

Foaming is preferably carried out while being molded, and it is carried out under heating and/or pressurizing through an extruder. A continuous extrusion foaming-molding is generally carried out, in which a resin or a resin composition is kneaded foaming is simultaneously carried out while extruding at ordinary temperatures and atmospheric pressures, and also there is often employed a method in which there is compressed a resin or a composition therefrom mixed with a foaming agent using an extruder, and then injected into a cavity of a low pressure in a melting state.

By the methods, the resin or the composition is molded into a sheet-like body, a strand-like body, a shape-like body, and a foam-loosend fiber body having a various foaming magnification, and optionally, it is further formed into a cushion material, a heat insulation material, an internally-decorative material for a variety of uses, a furniture, bedclothes, materials for agriculture, materials for fishery, materials for voyaging, materials for cars, materials for civil engineering and construction, materials for daily living life, sporting goods, and spongy brushes, etc.

Through the irradiation by ionizing radiation as described hereinabove, the foam can be obtained from the lactone resin and the composition therefrom. It is thought that in the foam, a melt-tension of the lactone resin or the composition is elevated by crosslinking of the lactone resin. As a result, air bubbles are maintained by being resistible to pressures in the air bubbles caused by foaming.

Accordingly, temperature in foaming is important, and it depends upon a resin or a composition. In the case of the lactone resin and the composition in the present invention, foaming is preferably carried out at a temperature in which melt viscosity becomes generally 30,000-80,000 poise. In the case of being lower than the temperature, viscosity becomes high in the melted resin, etc., resulting in that formation of foam is slow and the foaming magnification is not occasionally elevated. Contrarily, in the case of being higher than the temperature, viscosity is apt to excessively lower in the resin, etc., resulting in that air bubbles are not maintained and the foam cannot become occasionally obtained.

As the foaming agent, there are enumerated, for example, inorganic foaming agents such as sodium bicarbonate and organic foaming agents such as azodicarboxylic amide, N',N'-dinitroso pentamethylene tetramine, p,p' -oxy-bis(benzene sulfonyl carbazide), azobisisobutyronitrile, and benzene sulfonyl dihydrazide, which are a decomposition type foaming agent in which gases are generated by thermal decomposition.

Likewise, there can be also employed an evaporation-type foaming agent which has a foaming function by evaporation. As such the foaming agent, there can be enumerated a hydrocarbon such as ethane, propane, butane, pentane, hexane, heptane, ethylene, propylene and petroleum ether, a chlorinated hydrocarbon such as methyl chloride, monochlorotrifuluoro methane, dichlorodifuluoro methane, and dichlorotetrafuluoro ethane, carbon dioxide gas, nitrogen gas, and water, etc.

Addition amount of the foaming agent is preferably 0.1-30% by weight, and particularly 0.5-10% by weight based on the lactone resin or the composition therefrom. Further, there may be optionally added an organic acid such as stearic acid, oxalic acid, salicylic acid, phthalic acid, benzoic acid, citric acid, and tartaric acid, inorganic acid such as boric acid, salts of the above-mentioned organic acid or the inorganic acid, carbonates such as sodium carbonate, zinc oxide, calcium oxide, titanium oxide, silica, alumina, clay, kaoline, and diatomaceous, which are a foaming accelerator, a foaming stabilizer, or a nucleating agent.

Foaming magnification depends upon purposes of the foamed materials and, in a large-sized box for packing foods which requires a relatively high strength, it is preferably 1.5-6 times. In the case of a small-sized tray for foods, a heat insulator, and a cushion material which do not relatively require a high strength, it is preferably 3-25 times or so.

Size of the cell in the foam is not more than 1.0 cm, and preferably not less than 0.01 mm, and particularly 0.1-5 mm $\varnothing$. In the case of exceeding 1 cm $\varnothing$, roughness of the surface in the foam is remarkable, and it is apt to become brittle.

It is to be noted that in the case that it is employed as the heat-insulator, ratio occupied by a closed cell is preferably not less than 90%. Heat insulation property unpreferably lowers with a decrease of the ratio occupied by the closed cell.

In a foamed film having a diameter ($\varnothing$) of 0.01 mm or so, gloss is excellent, printing and designing are possible, whereby, it can be employed as a material for wrapping a toilet soap, etc.

Foam having a diameter ($\varnothing$) of 0.1-5 mm or so can be employed for a variety of uses by allowing to form open cells or closed cells. Particularly, there can be exemplified a box for packing foods having a warm-keeping property and the foaming magnification of 1.5-6 times, a tray for foods, a heat insulator or a cushion material having the foaming magnification of 3-25 times, by allowing to form open cells.

Further, a foam having a cell size of several mm or so and open cells can be employed as a disposable scrubbing brush employed in cleaning cars and bathing in hotels, etc.

Example

Hereinafter, although the present invention is more specifically illustrated by Examples, the present invention is not limited to the Examples.

It is to be noted that "%" and "part" in the Examples are based on the weight so far as not being particularly shown.

Melt Index (MI): It is an extruded weight per 10 minutes at 190°C and the loading of 2, 160 g, and it shows a flowing property (unit: g/10 minutes).

Gel fraction: Sample was wrapped by a stainless steel net having 200 meshes, and it was immersed in acetone for 12 hours. Gel fraction (percentage of insoluble components which shows crosslinked degree) is calculated by the following equation.

$$\text{Gel fraction (\%)} = (W_2/W_1) \times 100$$

(wherein, $W_1$ represents the dry weight of PCL before immersion, and $W_2$ represents the dry weight of PCL after immersion)

Test method for biodegradability: A tape obtained as described hereinabove was crushed and it was subjected to the test for biodegradability for 28 days according to JIS K6950 under circumstances of municipal sewage sludge.

First of all, in addition to the above-mentioned illustration concerning an effect by irradiation of ionizing radiation to polycaprolactone which is the lactone resin in the present invention, it is more specifically illustrated by reference examples.

(Preparation of a biodegradable resin composition)

[Preparation Example 1]

Ten g of polycaprolactone (a trade name of Placcel H7 manufactured by Daicel Chemical Industries, Ltd., which has a number average molecular weight of $1.28 \times 10^5$) pellets were placed in a glass ample having a diameter of 1.5 cm, and it was connected to a vacuum line to remove air and melt-sealed. The sample was completely melted in an oven of 80°C, and it was inserted into a metal block in advance thermostatted at 45°C, followed by irradiating 100 kGy by γ-rays from cobalt 60 with an irradiation dose of 10 kGy/hour.

After irradiated, the glass ample was broken to take out a column-shaped PCL having a diameter of 1.5 cm. A thin plate having the thickness of approximately 5 mm was cut from the PCL, and the gel fraction was measured as 70%.

Further, a sliced PCL having the thickness of 2-3 mm was compression-molded into a film-like piece at 200°C using a thermal press in order to measure heat resistance. The film obtained was exceedingly excellent in transparency. Heat resistance was measured at the conditions of pulling rate of 100 mm/minute and 120°C to obtain a tensile strength and extension in fracture.

Results are shown in Table I-1.

There were fed 40 parts of polycaprolactone which was spread over a bath and was irradiated by ionizing radiation as adjusted to the similar gel fraction to the above-mentioned Preparation Example 1, 60 parts of a poly-1,4-butanediol-succinate, 0.5 part of liquid paraffin, and 1 part of stearic acid amide into a twin-screw type ventilation extruder (a diameter of 40 mm), and extruded at a die temperature of 180°C to obtain pellets of a resin composition.

MI was 0.1 g/10 minutes in the resin composition.

[Preparation Example 2]

The same irradiation processes were followed as described in the Preparation Example 1 except that the irradiation was carried out at the irradiation dose of 150 kGy/hour by γray to obtain a polycaprolactone having the gel fraction (%) of 82%.

Further, heat resistance test was carried out by the method described in the Preparation Example 1, and results are shown in Table I-1.

There were employed 40 parts of polycaprolactone irradiated as described hereinabove, 60 parts of poly-1,4-butanediol-succinate, 0.5 part of liquid paraffin, 0.8 part of stearic acid amide, and 0.8 part of finely-powdered silica ("Aerojil #200" manufactured by Nihon Aerojil, Ltd.) to likewise obtain pellets of a resin composition as in the Preparation Example 1.

MI was 0.09 g/10 minutes in the resin composition.

[Preparation Example 3]

There were employed 40 parts of polycaprolactone irradiated as described in the Preparation Example 2, 60 parts of a poly-1,4-butanediol-succinate, 0.5 part of liquid paraffin, 0.5 part of stearic acid amide, and 0.5 part of finely-powdered silica (the same "Aerojil #200" as above) to likewise obtain pellets of a resin composition as in the Preparation Example 1.

MI was 0.09 g/10 minutes in the resin composition.

[Preparation Example 4]

There were employed 40 parts of polycaprolactone irradiated as described in the Preparation Example 2, 60 parts of a poly-1,4-butanediol succinate, 0.5 part of liquid paraffin, 0.5 part of stearic acid amide, 0.5 part of finely-powdered silica (the same "Aerojil #200" as above), and 50 parts of corn starch to likewise obtain pellets of a resin composition as in the Preparation Example 1. MI was 0.09 g/10 minutes in the resin composition.

[Comparative Preparation Example 1]

For references, a heat resistance test in relation to nonirradiated polycaprolactone was likewise carried out as in the Preparation Example 1, and results are shown in Table I-1.

There were employed 40 parts of a polycaprolactone nonirradiated, 60 parts of a poly-1,4-butanediol-succinate, 0.5 part of liquid paraffin, 0.8 part of stearic acid amide, and 0.5 part of finely-powdered silica ("Aerojil #200" manufactured by Nihon Aerojil, Ltd.) to likewise obtain pellets of a resin composition as in the Preparation Example 1. MI was 3.9 g/10 minutes in the resin composition.

Table I-1

| irradiation quantity (kGy) | gel fraction (%) | strength (MPa) | extension (%) | Haze value (%) |
|---|---|---|---|---|
| Preparation Example 1 | | | | |
| 100 | 70 | 2 | 550 | 15 |
| Preparation Example 2 | | | | |
| 150 | 82 | 3 | 470 | 10 |
| Comparative Preparation Example 1 | | | | |
| 0 | 0 | 0 | 0 | 90 |

Hereinafter, Examples are illustrated in relation to films.

(Examples I-1 to I-4, Comparative Example I-1)

An inflation film having a diameter (width) in a folded state of 650 mm was molded at conditions described below using the pellets of the resin compositions prepared in the Preparation Examples 1-4 and Comparative Preparation Example 1, respectively.

(Molding conditions)

Extruder: an extruder having a diameter of 40 mm
Screw: L/D=28, a screw for MDPE (polyethylene having a medium density)
Die: lip diameter of 150 mm and die gap of 1 mm
Extrusion temperature: 170°C at an end portion of a cylinder
Die temperature: 170°C
Resin temperature (T1): 160°C
Screw rotation speed: 15 rpm
Extrusion volume: 15 kg/hr
Blowing ratio: 2.5

Preparation of films by inflation was carried out using the respective resin compositions in the above-mentioned Preparation Examples 1-4, and the preparation of films was stably carried out to obtain a film having an excellent biodegradability.

Also, although it was able to mold a film using the resin composition in the Comparative Preparation Example 1, the film was only a film having conventional properties because of the absence of an effect by irradiation of ionizing radiation.

(Example II-1)

Pellets (melt index of 2.57 g/10 minutes of polycaprolactone was irradiated at an irradiation quantity of 15 kGy of an electron beam at ordinary temperatures, or while the pellets being maintained at a noncrystalline state which was caused by heating to not less than a melting point, and then by cooling to 50°C, 60 kGy or 160 kGy were irradiated, respectively. Irradiated pellets obtained showed a melt index of 0.05 g/10 minutes (gel fraction of 60%) and 0.03 g/10 minutes (gel fraction of 80%), respectively. The above-described nonirradiated pellets and the irradiated pellets were subjected to the biodegradability test for 4 weeks under circumstances of a municipal sewage active sludge at 25°C according to JIS K6950.

As a result, degradation ratio was 55% in the nonirradiated pellets, and it was 86.2% and 77.2%, respectively, in the irradiated pellets.

Further, the irradiated pellets were molded into a sheet-like article at 200°C with a hot press, followed by being crushed.

Crushed samples were likewise subjected to the biodegradability test. As a result, degradation ratio was 87.0% and 87.8%, respectively.

Ionizing radiation was changed from the electron beam to γ-ray to obtain same experimental results.

(Example II-2)

An electron beam was irradiated to pellets of polycaprolactone employed in the Example II-1 at an irradiation quantity of 15 kGy and ordinary temperatures. The irradiated pellets (melt index of 1.0 g/10 minutes and gel fraction of 0.2%) were extruded (resin temperature of 150°C) using an extruder equipped with a T-die having 40 mm ∅ to obtain a sheet having the thickness of approximately 270 μm. The sheet obtained was subjected to a tear strength test at ordinary temperatures, an impact strength test according to JIS K7211, and a tensile strength test according to JIS K6782 to compare with test results in sheets prepared from nonirradiated pellets.

As a result, respective physical properties are improved in the irradiated sheet in comparison with the nonirradiated sheet as described below. Values in oder correspond to the nonirradiated sheet and irradiated sheet, respectively.

| | |
|---|---|
| Tensile strength (MD: machine direction) | from 260 to 280 kgf-cm |
| Tensile strength (TD: transverse direction) | from 210 to 230 kgf-cm |
| Tensile extension (MD) | from 1130 to 1240% |
| Tensile extension (TD) | from 1130 to 1160% |
| Tear strength (MD) (not normalized by thickness) | from 160 to 270 gf |
| Tear strength (TD) | from 190 to 450 gf |
| Impact strength | from 23.8 to 25.2 kgf-cm |

(Example II-3)

The polycaprolactone employed in the Example II-1 was irradiated by an electron beam in irradiation quantity of 10, 20, 40, and 100 kGy, respectively, at ordinary temperatures to measure a change in MI and gel fraction (%), and results are shown in Table II-1.

Table II-1

| Irradiation quantity of electron beam (kGy) | | | | |
|---|---|---|---|---|
| 0 | 10 | 20 | 40 | 100 |
| MI (g/10 minutes) | | | | |
| 2.6 | 1.0 | 0.5 | 0.1 | 0.08 |
| Gel fraction (%) | | | | |
| 0 | 0.1 | 0.2 | 0.3 | 23.7 |

It is to be noted that Bionolle which is a biodegradable resin was added to the polycaprolactone in the Examples II-1 to II-3, and irradiation was investigated, however, results did not basically change.

In the Example II-3, a sheet obtained from a 20 kGy-irradiated caprolactone was cut into a piece having 10 cm square to prepare a sample. The sample was immersed in warm water of 70°C, and shrinkage ratio was measured.

As a results, the sheet obtained from nonirradiated caprolactone fused, however, the sheet obtained from a 20 kGy-irradiated caprolactone did not fuse, and it shrunk 60% in MD direction and 30% in TD direction.

Hereinafter, a degradable bag for garbages is illustrated by Examples.

(Examples III-1 to III-4 and Comparative Example III-1)

Films were prepared by an inflation method at molding conditions described hereinafter using the pellets of the resin composition prepared in the Preparation Examples 1 to 4 and the Comparative Preparation Example 1, and a lengthwise long bag for garbages having the width of 450 mm and the length of 500 mm was prepared by a heat sealing method.

(Molding conditions)

Extruder: an extruder having a diameter of 40 mm
Screw: L/D=28, a screw die for an MDPE (polyethylene having a medium density), lip diameter of 150 mm, and die gap of 1 mm
Extrusion temperature: 170°C at an end portion of a cylinder
Die temperature: 170°C
Resin temperature (T1): 160°C
Screw rotation speed: 15 rpm
Extrusion volume: 15 kg/hr
Blowing ratio: 2.5

Bags for garbages obtained from films prepared using the resin compositions in the above-mentioned Preparation Examples 1 to 4 were employed in Examples III-1 to III-4, respectively, and bag for garbages obtained from film prepared using the resin composition in the Comparative Preparation Example 1 was employed in Comparative Example III-1. Specifically, foods garbages produced in a kitchen of a household were filled in the bags for garbages, and those were thrown into a compost apparatus without removing the bags, followed by compost at approximately 80°C for 8 hours in the compost apparatus.

As a result, there were biodegradably decomposed the bags for garbages (Examples III-1 to III-4) according to the present invention and the bag for garbages in the Comparative Example III-1.

[Comparative Example III-2]

A cellulose-made film having the thickness of 30 microns was employed as a film, and a bag for garbage was likewise prepared as in the Example III-1. Food garbages were filled in the bag, and biodegradability was observed. Although the bag for garbages in the Comparative Example III-2 was broken and shrunk, the film itself of the bag was remained as it is without biodegradation.

[Example III-5]

In surface and back surface of the bags for garbages obtained in the Example III-1, apertures having diameter of 1 mm were lengthily and laterally formed at a portion of 1/2 from a lower portion with an interval of 10 mm.

The bag for garbages was set around an inside of a plastic-made case having a triangle shape placed at a corner of a kitchen drainage. It was able to be employed as a water-drainable net-like bag for garbages, and then it was treated in a compost apparatus at approximately 80°C for 8 hours under a condition of containing as slight amount as possible of water. The bag for garbages according to the present invention was biodegradably decomposed.

Hereinafter, a degradable mulch film for agriculture was illustrated by Examples.

(Examples IV-1 to IV-4 and Comparative Example IV-1)

A mulch film for agriculture having the width of 900 mm was prepared by an inflation method under molding conditions described below using the pellets of resin compositions prepared in the Preparation Examples 1 to 4 and Comparative Preparation Example 1.

(Molding conditions)

Extruder: an extruder having a diameter of 40 mm
Screw: L/D=28, a screw die for an MDPE (a polyethylene having a medium density), lip diameter of 300 mm, and die gap of 1 mm
Extrusion temperature: 170°C at an end portion of a cylinder
Die temperature: 170°C
Resin temperature (T1): 160°C
Screw rotation speed: 15 rpm
Extrusion volume: 30 kg/hr
Blowing ratio: 2.5

The mulch film obtained from films prepared from the resin compositions in the above-mentioned Preparation Examples 1 to 4 were employed in Examples IV-1 to IV-4, respectively, and the mulch film obtained from a film prepared from the resin composition in the Comparative Preparation Example 1 was employed in Comparative Example IV-1. Specifically, the mulch films were spread over the surface of soil at air temperature of 20-35°C during the daytime in summer seasons, and broken appearance of the mulch films was observed at a period of 1 month later and 3 months later.

Subsequently, at a period of further 2 months, a possibility of a plowing work into soil was checked. Also, an occurrence appearance of biodegradation was observed visually and by a feeling of hands.

As a result, the mulch films according to the present invention were not broken even at a period of 3 months after laying, and plowing into soil was easy. Further, it was able to observe a biodegradation, and it was identified by a feeling of hands at a period of 1 month after plowing into soil.

On the other hand, the mulch film in the Comparative Example IV-1 did not change even at a period of 3 months after plowing into soil, and even at a period of further 2 months after plowing, and plowing work into soil was impossible, and it was impossible to be plowed into soil. Accordingly, it was not biodegradably decomposed.

Hereinafter, a degradable shrink film was illustrated by Examples.

[Examples V-1 to V-3 and Comparative Example V-1]

Pellets of a polycaprolactone (Placcel H7 manufactured by Daicel Chemical Industries, Ltd., which has a number average molecular weight of $1.28 \times 10^5$) were irradiated by an electron beam in an irradiation quantity of 0 (Comparative Example V-1), 5 (Example V-1), 10 (Example V-2), and 20 kGy (Example V-3), followed by extruding respective pellets by a T-die extruder at 150°C and being stretched in 3 times and allowing to pass through cooling rolls to obtain a sheet having the thickness of 0.3 mm.

Strippability from the cooling rolls and shrinkage ratio in heated water were measured in the sheet obtained. Results are shown in Table V-2.

Strippability of the molded sheet from the rolls was evaluated according to the standards described below.

◎ : very strippable
○ : strippable
△: slightly not strippable
X: not strippable

Also the sheet was cut into a piece having lateral length of 45 mm and longitudinal length of 100 mm to prepare samples for a thermal shrinking test. One edge of the sheet samples obtained for a thermal shrinking test was clipped by a clip, and it was immersed in water of the temperatures shown in Table V-2 for 30 seconds, followed by measuring a longitudinal dimension of the samples and calculating a shrinkage ratio using the equation described below.

$$\text{Shrinkage ratio (\%): }\{(L0-L)/L0\}\times100$$

L0: longitudinal length (100 mm) of the sample for a thermal shrinking test
L: longitudinal length (mm) of the sample for a thermal shrinking test after immersed in heated water for 30 seconds at temperatures to be measured

Results are shown in Table V-1.

Table V-1

| | Irradiation quantity (kGy) | Roll mold releasing property | Heat shrinkage ratio (%) | | | |
|---|---|---|---|---|---|---|
| | | | 40°C | 50°C | 60°C | 80°C |
| Examples V-1 | 5 | ◎ | 0 | 5 | 30 | 50 |
| Examples V-2 | 10 | ○ | 0 | 10 | 70 | 80 |
| Examples V-3 | 20 | △ | 5 | 30 | 80 | 90 |
| Comparative Example V-1 | 0 | X | 0 | 0 | *1 | *2 |

◎: very strippable
○: strippable
△: apt to be slightly strippable
X: apt to be not strippable
*1: not shrunk and extended by a dead weight because of fusion (length of 120%)
*2: incapable of measuring because of fusion

Hereinafter, a sheet-molded article was illustrated by Examples.

(Examples VI-1)

Pellets of polycaprolactone (melt index of 2.57 g/10 minutes) were irradiated by an electron beam of an irradiation quantity of 15 kGy at ordinary temperatures. A toluene solution containing 5% of the irradiated pellets (melt index of 1.0 g/10 minutes and gel fraction of 0.2%) was prepared, followed by immersing and coating over a paper having a density of 24 g/m$^2$.

After coating, an impregnated paper having the amount of a coated resin of 1.9 g/m$^2$ was obtained by drying with warm air and at a period of having attained to a constant weight after evaporation of solvent. The impregnated paper was spread over a ridge of fields in outdoor using a spreading machine to test a degradability and durability. The durability was visually evaluated by the presence or the absence of a broken portion caused through a sheet. Results are shown in Table VI-1.

(Examples VI-2)

The same procedures were followed as in the Example VI-1 except that the concentration of polycaprolactone was changed to 7% to obtain an impregnated paper having the amount of a coated resin of 2.9 g/m$^2$.
Evaluation was likewise carried out as in the Example VI-1, and results are shown in Table VI-1.

(Comparative Example VI-1)

The same procedures were followed as in the Example VI-1 except that there was employed polycaprolactone nonirradiated by ionizing radiation to obtain an impregnated paper.
Evaluation was likewise carried out as in the Example VI-1, and results are shown in Table VI-1.

(Comparative Example VI-2)

The same evaluation was followed as in the Example VI-1 except that a paper alone was employed without the use of polycaprolactone which is a biodegradable resin. Results are shown in Table VI-1.

(Comparative Example VI-3)

A conventional polyethylene-made (a low density polyethylene) mulch sheet (thickness of 0.1 mm) was likewise evaluated as in the Example VI-1. Results are shown in Table VI-1.

Table VI-1

| Durability (presence or absence of a broken portion in sheet) | | |
|---|---|---|
| | 1 month after spreading | 3 months after spreading |
| Examples VI-1 | none | none |
| Examples VI-2 | none | none |
| Comparative Example VI-1 | none | presence |
| Comparative Example VI-2 | presence | presence |
| Comparative Example VI-3 | none | none |

Hereinafter, a thin-walled molded article is illustrated by Examples.

(Examples VII-1 to VII-4 and Comparative Example VII-1)

A sheet was molded using pellets of the resin compositions prepared in the Preparation Examples 1 to 4 and Comparative Preparation Example 1, respectively, and, a vessel and a cover for a blister pack were molded using the sheet by compression molding.
The blister pack of the present invention is excellent in film-moldability, blister pack-moldability from a film, and it has biodegradability under natural circumstances, and it is excellent in strength and transparency, etc.
Hereinafter, a thick-walled vessel is illustrated by Examples.

(Example VIII)

A thick-walled vessel such as a bottle and a flower pot was molded using the above-mentioned pellets. It is excellent in moldability, and it has biodegradability under natural circumstances, and it is excellent in strength and transparency.
Hereinafter, a tape and a band are illustrated by Examples.

(Example IX-1)

A tape having a longitudinal stretch ratio of 5 was molded using the pellets of the resin compositions prepared in the Preparation Examples 1 to 4 and Comparative Preparation Example 1, respectively, by a T-die extrusion molding machine.
The tape obtained from the pellets in the Preparation Examples 1 to 4 were well-balanced in view of moldability, strength, and degradability.

(Example IX-2)

Thirty parts of talc was mixed with 70 parts of a lactone-contained resin composed of 30 parts of polycaprolactone (PCl H7 manufactured by Daicel Chemical Industries, Ltd.) irradiated by irradiation quantity of 20 kGy of an electron beam at ordinary temperatures and 70 parts of 1,4-butanediol-succinate (Bionolle #1001 manufactured by Showa Kobunshi, Ltd.), followed by feeding into a twin-screw type ventilation extruder (diameter of 40 mm), and being extruded at a die temperature of 180°C to obtain pellets of a lactone-contained resin composition, and then preparing a tape using the pellets.
As a result, it was able to obtain a tape which exceeds a conventional polypropylene-made tape for packing and binding.
Also, as a result of a biodegradability test, approximately 75% of the tape was decomposed by an active sludge for 28 days.
Hereinafter, a biodegradable fiber, woven fabrics, non-woven fabrics, and a material for filtration are illustrated by Examples.

(Example X-1)

70 parts by weight of an aliphatic polyester resin (a number average molecular weight of 70,000) obtained by succinic acid and 1,4-butanediol was kneaded with 30 parts by weight of a product in which polycaprolactone ("PLACCEL" H7 manufactured by Daicel Chemical Industries, Ltd., which has a number average molecular weight of $7 \times 10^4$) is irradiated by ionizing radiation in order to adjust the gel fraction to the same extent of value as in the above-mentioned Preparation Example 1 to obtain a polyester resin composition. The composition was extruded from a spinneret having 16 holes at extruding temperature of 200°C using an extruder having the diameter of 25 mm, followed by air-cooling while stretching.

Subsequently, multifilaments (2d/filament) having 32 denier were obtained by further stretching 2 times with a draft ratio of 200.

The multifilaments showed tensile strength properties of break strength of 6 g/d and extension of 40%. Also, biodegradability was excellent in burying in soil. It is to be noted that the tensile strength properties were measured according to JIS L1013. In a biodegradability test, samples were taken out after burying in soil for 1 month. By checking a disappearance or not of shapes in the fibers, biodegradability was evaluated.

In the case that retention ratio of the tensile strength in the fibers is lowered to not more than 50%, it was evaluated as an excellent biodegradability.

(Comparative Example X-1)

Multifilaments were likewise molded as in the Example X-1 except that a polycaprolactone nonirradiated by ionizing radiation was employed in place of the polycaprolactone irradiated by ionizing radiation in the Example X-1 to check the strength in fracture and the biodegradability.

As a result, the strength in fracture was 4 g/d, and extension was 40%. Also, in the biodegradability test buried in soil, samples did not almost change even after burying in soil for 1 month, and in burying in soil for 2 months, retention of tensile strength narrowly lowered to not more than 50%.

As a result that a heat resistance test was carried out according to the method described in the Preparation Examples 1 in relation to the polycaprolactone not irradiated as a reference, it fused at the temperatures, and it was not able to measure the strength and extension, and a Haze value was 90%.

(Example X-2)

There were likewise employed the polyester resin composition containing the polycaprolactone irradiated by ionizing radiation and the extruder as in the Example X-1, and monofilaments having 900 denier were obtained by extruding from a spinneret having 3 holes at an extruding temperature of 210°C and drawing ratio of 8 times after cooling in water at 70°C.

The monofilaments showed strength in fracture of 6.5 g/d and extension of 50% as tensile strength properties. Further, biodegradability was excellent after burying in soil for 1 month.

(Comparative Example X-2)

Multifilaments were likewise molded as in the Example X-2 except that polycaprolactone nonirradiated by ionizing radiation was employed in place of the polycaprolactone irradiated by ionizing radiation in the Example X-2 to check the strength in fracture and the biodegradability.

As a result, the strength in fracture was 5.5 g/d, and extension was 50%. Also, in the biodegradability test buried in soil, samples did not almost change even after burying in soil for 1 month, and after burying in soil for 2 months, retention ratio of the tensile strength narrowly lowered to not more than 50%.

(Example X-3)

In 92.5 parts by weight of acetone 7.5 parts by weight of polycaprolactone (PCl H7 manufactured by Daicel Chemical Industries, Ltd., a number average molecular weight of not less than 70,000) likewise irradiated by irradiation quantity as in the Example X-1 was dissolved to prepare a binder solution for non-woven fabrics.

Independently, a cotton-made non-woven fabrics (PL2050 manufactured by Nisshinboseki Oikos, Ltd., density of 50 g/m$^2$) manufactured by a flowing-water binding method was immersed in the above-described solution to impregnate the polycaprolactone treated as described hereinabove. This was dried under streaming air at room temperatures while touching by fingers, followed by drying by warm air at 50°C for 60 minutes.

In the non-woven fabrics obtained, resin was impregnated in a proportion of 25 g/m$^2$, and density was 75 g/m$^2$

34

as a whole. Even in the case that this was immersed in water at room temperatures, dimensional stability was very excellent, and this showed a tear strength of 4.7 kg/cm when dried and a tear strength of 4.1 kg/cm when immersed which are a high value.

Biodegradability test was carried out by observing a state after immersing in river water for 1 month, and a state of degradation was already observed.

(Comparative Example X-3)

A test was followed by the same conditions as in the Example X-3 except that there was employed polycaprolactone nonirradiated by ionizing irradiation. As a result, although a dimensional stability was very excellent, a tear strength was 2.6 kg/cm when dried, and a tear strength was 2.7 kg/cm when immersed in water.

Biodegradability test was carried out by observing a state after immersing in river water for 1 month, degradation was not observed yet, and an appearance of degradation was observed at a period of six months after immersed.

(Example X-4)

A polycaprolactone resin (PCl H7 manufactured by Daicel Chemical Industries, Ltd., a relative viscosity of 2.35 to 3.20) was irradiated by ionizing radiation in the conditions shown in the Example X-1, followed by extrusion-molding to obtain a monofilament having diameter of 1.5 mm. A plain-woven fabric was prepared using the monofilament, followed by fusedly-fixing at 100°C with a hot press to obtain a material for filtration. Usual waste water (river water) was passed through the material for filtration for 12 months, followed by being washed. It was buried in soil at a circumstance of 25°C x 85% RH for 24 months to carry out a biodegradability test. At a period of 1 month after being buried in soil after streaming river water for 12 months and washing, a phenomenon of biodegradation was already observed in the material for filtration.

(Comparative Example X-4)

The same test was followed as in the Example X-4 except that a polycaprolactone nonirradiated by ionizing radiation was employed.

River water was passed through for 12 months, followed by being washed. At a period of 24 months after being buried in soil, a phenomenon of biodegradation was narrowly observed.

(Example X-5)

The same test was followed as in the Example X-1 except that a spinneret for a monofilament was employed to obtain an stretched monofilament having 150 d. The monofilament was employed to prepare a woven fabric by a plain weaving.

A shape-stabilizing processing was carried out for the woven fabric. As a result, it was maintained without creases for a long-term. Also, a biodegradability was excellent in soil.

Hereinafter, a biodegradable net is illustrated by Examples.

(Example XI)

A tape having a longitudinal stretching ratio of 5 times was molded by a T-die extruder using the pellets of resin compositions respectively prepared in the Preparation Examples 1 to 4 and Comparative Preparation Example 1. Tapes were longitudinally and laterally aligned to prepare a net by thermal adhesion, and it can be employed as a bag for civil engineering and construction. Tapes prepared using the pellets in the Preparation Examples 1-4 were well-balanced in view of moldability, strength, and degradability.

Hereinafter, a degradable resinous foam is illustrated by Examples.

(Example XII-1)

40 parts of the polycaprolactone irradiated in order to adjust the gel fraction to the same extent of value as in the above-mentioned Preparation Example 1, 60 parts of poly-1,4-butanediol-succinate, 0.5 part of liquid paraffin, 1 part of stearic acid amide, and 5 parts of azodicarboxylic acid amide which is a foaming agent were fed into an extruder (diameter of 40 mm), followed by being extruded at a die temperature of 180°C to obtain a continuous sheet-like resinous foam

In the foam, thickness was 0.1 mm, and foaming magnification was 2.5. In the case that it was buried in soil, it was biodegradably decomposed without remaining a shape at a period of 60 days after being buried.

(Example XII-2)

A resinous foam was likewise obtained as in the Example XII-1 using 40 parts of the polycaprolactone obtained by an irradiation process in the Preparation Example 2, 60 parts of poly-1,4-butanediol-succinate, 0.5 part of liquid paraffin, 0.8 part of stearic acid amide, 0.8 part of a finely-powdered silica ("Aerojil #200" manufactured by Nihon Aerojil, Ltd.), and 5 parts of azodicarboxylic acid amide which is a foaming agent.
In the foam, thickness was 0.1 mm, and foaming magnification was 2.5. In the case that it was buried in soil, it was biodegradably decomposed without a shape at a period of 60 days after being buried.

(Comparative Example XII-1)

A resinous foam was likewise obtained as in the Example XII-1 using 50 parts of a 1-butene-modified LLDPE (a linear low density polyethylene, MI: 0.8 g/10 minutes), 20 parts of a 1-butene-modified VLDPE (a very low density polyethylene, MI: 10 g/10 minutes), 30 parts of a finely-powdered calcium carbonate modified by a saturated fatty acid, and 5 parts of azodicarboxylic acid amide which is a foaming agent.
In the foam, thickness was 0.1 mm, and foaming magnification was 2.5. In the case that it was buried in soil, an original shape was maintained without observation of biodegradation even at a period of 60 days after being buried.

(Comparative Example XII-2)

The polycaprolactone employed in the Example XII-1 was employed without being irradiated by γ-ray, and molding was likewise carried out as in the Example XII-1 to measure a heat resistance, etc.
Of the above-mentioned results, in data in relation to the polycaprolactones alone after irradiation in the Example XII-1, the Example XII-2, and Comparative Example XII-2, an irradiation quantity and a gel fraction strength, and a strength, extension, Haze value in a film obtained by compression molding are the same as the above-mentioned Table I-1.

POSSIBILITY OF UTILIZATION IN INDUSTRY

According to the present invention, there can be obtained a degradable resin, a degradable resin composition, a molded article, and a film which are excellent in degradability, moldability, and mechanical properties through the formation of a crosslinking structure in an inside of a lactone resin by irradiation of specified ionizing radiation. Particularly, melting point is elevated, and degradability is also improved in addition to capability of molding and employing at higher temperatures compared to conventional products.
In a film by an inflation method, an inflation film can be stably provided owing to irradiation by ionizing radiation. The film obtained is excellent in degradability, and it can be employed as an environmental adaptable material for wrapping and a film for agriculture, etc.
By the use of the film of the present invention, there can be provided a degradable bag for garbages and water-drainable net-made bag for garbages having chemical or biochemical degradability for a short time of period over ground and underground, in a compost apparatus and under other natural circumstances.
The mulch film for agriculture of the present invention can be readily molded owing to an effect of irradiation by ionizing radiation, and it sufficiently shows functions as a conventional mulch film owing to a sufficient physical strength. And, the strength can be readily lowered to an extent of being capable of readily plowing into soil around a period of a desired and fixed lapse of time and, moreover, it can be biodegradably decomposed at a speed which exceeds a biodegradability in a raw material for a mulch film after being buried in soil.
The shrink film of the present invention is well-balanced in view of moldability as a shrink film, physical properties during uses, particularly, heat resistance, and a biochemical degradability after being dumped, etc.
In the sheet-like molded article of the present invention, as particularly shown in the use as a mulch sheet for agriculture, strength can be highly maintained over a long time of period and, on the other hand, it shows a sufficient biodegradability in view of capability or incapability of plowing into soil.
By the present invention, there can be provided a thin-walled molded article, a vessel for foods, a blister pack, and a tray which are environmental adaptable and excellent in transparency.
By the present invention, there can be obtained a thick-walled molded article in which there are improved degradability, moldability, and mechanical properties, and, particularly, it can be molded and employed at a higher temperature compared to a conventional article owing to an improved melting point. Further, a molded article obtained can be also post-irradiated by ionizing radiation. Still further, the thick-walled molded article can be also simultaneously sterilized by irradiation of ionizing radiation for a final product.

By the present invention, there can be obtained a degradable tape in which there are improved degradability, moldability, and mechanical properties, and, particularly, it can be molded and employed at a higher temperature compared to a conventional article owing to an improved heat resistance.

By the present invention, there can be provided fibrous materials such as fibers, non-woven fabrics, and materials for filtration having a practically high mechanical strength property and, moreover, an improved high biodegradability.

By the present invention, there can be employed a lactone resin having a high melt viscosity owing to an effect of irradiation by ionizing radiation, as a result, a foam can be readily molded. Further, the foam sufficiently shows inherent functions of light weight and a heat insulation property, and it is decomposed at a higher speed compared to conventional ones after having been buried in soil. The resinous foam obtained by the present invention is molded into a sheet-like article, and it can be employed as a vessel for foods, a cushion material, and a wrapping material, etc., further, it can be also employed as a heat insulation material and a cushion material by molding into a bulk-like article.

## Claims

1. A polycaprolactone-contained resin composition containing a polycaprolactone resin irradiated by ionizing radiation, and at least any one of the other biodegradable resin and an additive for resins.

2. A polycaprolactone-contained resin composition as claimed in claim 1 wherein said polycaprolactone resin has branched structures or a gel fraction of 0.01-90%.

3. A polycaprolactone-contained resin composition as claimed in claim 2 wherein said other biodegradable resin is an aliphatic polyester, a biodegradable cellulose ester, a polypeptide, a polyvinylalcohol, and a mixture thereof.

4. A polycaprolactone-contained resin composition as claimed in claim 3 wherein the weight ratio of said polycaprolactone resin/synthetic aliphatic polyester resin is 5/95-70/30.

5. A polycaprolactone-contained resin composition as claimed in claim 1 wherein said additive for resins is a plasticizer, a thermal stabilizer, a lubricant, an anti-blocking agent, a nucleating agent, a photo-decomposing agent, a biodegradation accelerator, an antioxidant, an ultraviolet stabilizer, an anti-static agent, a flame retardant, a drop-flowing agent, an antibacterial agent, a deodorant, fillers, a coloring agent, and a mixture thereof.

6. A molded article prepared by extrusion molding, injection molding, blow molding, calendar molding, compression molding, transfer molding, thermal molding, flow molding, or lamination molding of a polycaprolactone-contained resin composition claimed in any one of claims 1-5.

7. Pellets which comprises a polycaprolactone-contained resin composition claimed in any one of claims 1-5.

8. A film which comprises molding a polycaprolactone-contained resin composition claimed in any one of claims 1-5.

9. A film as claimed in claim 8 which is monoaxially or biaxially stretched.

10. A degradable bag for garbages molded from a polycaprolactone-contained resin composition claimed in any one of claims 1-5.

11. A degradable mulch film for agriculture molded from a polycaprolactone-contained resin composition claimed in any one of claims 1-5.

12. A degradable shrink film molded from a polycaprolactone-contained resin composition claimed in any one of claims 1-5.

13. A sheet-like molded article molded from a polycaprolactone-contained resin composition claimed in any one of claims 1-5.

14. A sheet-like molded article wherein there is impregnated into paper a non-aqueous solution, an emulsion, or a slurry of a polycaprolactone-contained resin composition claimed in any one of claims 1-5.

**15.** A degradable sheet for agriculture which comprises a sheet-like molded article claimed in claim 14.

**16.** A sheet-like molded article wherein a polycaprolactone-contained resin composition claimed in any one of claims 1-5 is impregnated in papers or fibers.

**17.** A sheet-like molded article wherein a film claimed in claim 8 is laminated.

**18.** A degradable thin-walled molded article which comprises molding a polycaprolactone-contained resin composition claimed in any one of claims 1-5.

**19.** A degradable thin-walled molded article as claimed in claim 18, wherein tensile elasticity (JIS K7127) of the molded article is 100-800 N/mm$^2$, impact strength (JIS K7211) of the molded article is 10-50 kg • cm, or a glass transition temperature of said resin composition is -60-20°C.

**20.** A degradable tape which comprises molding a polycaprolactone-contained resin composition claimed in any one of claims 1-5.

**21.** A degradable tape as claimed in claim 20, wherein an uneveness is formed at the surface of one side or both sides.

**22.** A degradable tape as claimed in claim 20, wherein an adhesive layer, a mold-release agent layer and/or a heat-seal layer are formed at the surface of one side or both sides.

**23.** A degradable thick-walled vessel which comprises molding a polycaprolactone-contained resin composition claimed in any one of claims 1-5.

**24.** A biodegradable fiber which comprises molding a polycaprolactone-contained resin composition claimed in any one of claims 1-5.

**25.** A degradable woven fabric which comprises a biodegradable fiber claimed in claim 24.

**26.** A degradable non-woven fabric which comprises molding a polycaprolactone-contained resin composition claimed in any one of claims 1-5.

**27.** A biodegradable non-woven fabric which comprises at least one kind of fibers selected from the group consisting of natural animal fibers, natural vegetable fibers, regenerated fibers and semisynthetic fibers, and a polycaprolactone-contained resin composition claimed in any one of claims 1-5, characterized in that polycaprolactone in said polycaprolactone-contained resin composition has a number average molecular weight of not less than 10,000 which is employed as a binder for said fibers.

**28.** A biodegradable non-woven fabric as claimed in claim 26, wherein said biodegradable non-woven fabric contains a biodegradable cellulose acetate having a substituted degree of not more than 2.1.

**29.** A biodegradable material for filtration which comprises a mass of biodegradable fibers claimed in claim 24, a biodegradable woven fabric claimed in claim 25, and a biodegradable non-woven fabric claimed in claims 26-28.

**30.** A biodegradable coated material for filtration which comprises metallic fibers and/or wires, which are eroded in natural circumstances coated with a polycaprolactone-contained resin composition claimed in any one of claims 1-5.

**31.** A biodegradable net which comprises a film claimed in claim 8, wherein said film has a plurality of apertures.

**32.** A biodegradable net wherein fibers claimed in claim 24 and/or tapes claimed in claim 22 are employed as warps and/or wefts.

**33.** A biodegradable resinous foam which comprises foaming a composition containing a polycaprolactone-contained resin composition as claimed in any one of claims 1-5 and a foaming agent.

**34.** A biodegradable resinous foam as claimed in claim 33, wherein the cell-size of the foam ranges in 0.01-1 cm ∅.

# INTERNATIONAL SEARCH REPORT

| International application No. |
|---|
| PCT/JP99/01208 |

**A. CLASSIFICATION OF SUBJECT MATTER**
Int.Cl$^6$ C08L67/04, C08J5/18, C08J3/28, C08J9/04, C09J7/02

According to International Patent Classification (IPC) or to both national classification and IPC

**B. FIELDS SEARCHED**

Minimum documentation searched (classification system followed by classification symbols)
Int.Cl$^6$ C08L67/00-08, C08J5/18, C08J3/28, C08J9/00-42, C09J7/00-04

Documentation searched other than minimum documentation to the extent that such documents are included in the fields searched

Electronic data base consulted during the international search (name of data base and, where practicable, search terms used)
WPI/L

**C. DOCUMENTS CONSIDERED TO BE RELEVANT**

| Category* | Citation of document, with indication, where appropriate, of the relevant passages | Relevant to claim No. |
|---|---|---|
| Y | JP, 59-108059, A (Daicel Chemical Industries,Ltd.), 22 June, 1984 (22. 06. 84), Claims ; page 2, lower left column, line 12 to page 3, lower left column, line 9 ; Example 8 (Family: none) | 1-34 |
| Y | JP, 58-8609, A (Sumitomo Electric Industries,Ltd.), 18 January, 1983 (18. 01. 83), Claims (Family: none) | 1-34 |
| Y | JP, 57-185344, A (Daicel Chemical Industries,Ltd.), 15 November, 1982 (15. 11. 82), Claims ; page 2, upper left column, line 3 to lower right column, line 17 (Family: none) | 5-34 |

| [x] Further documents are listed in the continuation of Box C. | [ ] See patent family annex. |
|---|---|

| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>8 June, 1999 (08. 06. 99) | Date of mailing of the international search report<br>22 June, 1999 (22. 06. 99) |
|---|---|
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

| International application No. |
|---|
| PCT/JP99/01208 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP, 54-155687, A (Union Carbide Corp.),<br>7 December, 1979 (07. 12. 79),<br>Claims ; page 10, lower left column, line 7 to<br>page 11, upper left column, line 11 ; page 12, lower<br>right column, lines 5 to 15<br>& EP, 3846, A1 & US, 4175177, A<br>& DE, 2963872, G & CA, 1134992, A | 1-34 |
| Y | JP, 54-154495, A (Union Carbide Corp.),<br>5 December, 1979 (05. 12. 79),<br>Claims & EP, 3845, A1 & US, 4226230, A<br>& US, 4238522, A & US, 4286586, A<br>& DE, 2966105, G & CA, 1142692, A | 1-34 |
| Y | JP, 47-2861, B1 (GAF Corp.),<br>26 January, 1972 (26. 01. 72),<br>Claims ; column 2, lines 4 to 36 ; column 6,<br>lines 7 to 43<br>& DE, 1928102, B & CA, 844054, A<br>& GB, 1275082, A | 1-34 |

Form PCT/ISA/210 (continuation of second sheet) (July 1992)